Europäisches Patentamt

European Patent Office

Office européen des brevets

(19)

(11) **EP 1 231 228 A1**

(12) **EUROPEAN PATENT APPLICATION**

(43) Date of publication:
**14.08.2002 Bulletin 2002/33**

(51) Int Cl.⁷: **C08F 210/02**

(21) Application number: **01300840.4**

(22) Date of filing: **31.01.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sasol Technology (Proprietary) Limited**
**2196 Johannesburg (ZA)**

(72) Inventors:
• **Joubert, Dawid Johannes**
  **Sasolburg 9570 (ZA)**

• **Young, Desmond Austin**
  **Vanderbijlpark 1911 (ZA)**
• **Tincul, Ioan**
  **Sasolburg 9570 (ZA)**

(74) Representative: **Ablewhite, Alan James**
**MARKS & CLERK,**
**57/60 Lincoln's Inn Fields**
**London WC2A 3LS (GB)**

(54) **Polymerization**

(57)   A polymer of ethylene as a first monomeric component, with a high carbon number linear alpha olefin having at least five carbon atoms as a second monomeric component. At least one of the monomeric components is Fischer- Tropsch derived so that it includes at least one other olefinic component. A process for producing the polymer is also provided.

EP 1 231 228 A1

Printed by Jouve, 75001 PARIS (FR)

**Description**

THIS INVENTION relates to polymerization. It relates in particular to a polymer, and to a process for producing a polymer.

According to a first aspect of the invention, there is provided a polymer of ethylene as a first monomeric component, with a high carbon number linear alpha olefin having at least five carbon atoms as a second monomeric component, with at least one of the monomeric components being Fischer- Tropsch derived so that it includes at least one other olefinic component.

In other words, a polymer according to the first aspect of the invention is the reaction product obtained when a first monomeric component comprising ethylene is reacted with a second monomeric component comprising a high carbon number linear alpha olefin having at least five carbon atoms, with at least one of the monomeric components being Fischer-Tropsch derived so that it includes at least one other olefinic component. Normally a plurality of the other olefinic components will be present in a Fischer-Tropsch derived monomeric component.

More particularly, the polymer may be that obtained by reacting the first monomeric component with the second monomeric component in the presence of a metallocene catalyst.

The high carbon number linear olefin may be 1-pentene, 1-hexene, 1-heptene, 1-octene or 1-nonene.

The first and/or the second monomeric component is thus, as hereinbefore set out, Fischer-Tropsch derived. The polymer may include at least one further olefinic monomeric component. Thus, the polymer may include, as a third monomeric component, a high carbon number linear alpha olefin having 4 or more carbon atoms, and which is different to that of the second monomeric component, with the third monomeric component also being Fischer-Tropsch derived so that it includes at least one other olefinic component. It may then also, if desired, include at least one further different high carbon number linear alpha olefin which is Fischer-Tropsch derived. In other words, it will then include a plurality of Fischer-Tropsch derived monomeric components. Instead, or additionally, however, the polymer may include at least one conventional olefinic monomeric component. Thus, the polymer may comprise at least one conventional olefinic monomeric component together with the second monomeric component or together with a plurality of Fischer-Tropsch derived olefins.

By 'Fischer-Tropsch derived' in respect of a monomeric component is meant that it is obtained from the so-called Fischer-Tropsch process, ie it is obtained by reacting a synthesis gas comprising carbon monoxide and hydrogen in the presence of a suitable Fischer-Tropsch catalyst, normally a cobalt, iron, or cobalt/iron Fischer-Tropsch catalyst, at elevated temperature in a suitable reactor, which is normally a fixed or slurry bed reactor, thereby to obtain a range of products, including olefinic monomeric components suitable for use in the polymers of this invention. The products from the Fischer-Tropsch reaction must then usually be worked up to obtain individual products such as the olefinic monomeric components suitable for use in the polymers of the present invention.

By 'conventional olefinic monomeric component' is meant any olefinic monomer that is not Fischer Tropsch derived and that can be used in copolymerization with low carbon number olefins.

Thus, the polymers according to this invention may be polymers of ethylene, with at least one Fischer Tropsch derived linear alpha olefin or with a mixture of a linear alpha olefin obtained from a Fischer-Tropsch process and any other polymerization grade olefinic monomer(s) obtained from other processes, provided that these polymers are obtained by polymerization of the olefins or monomer(s) in the presence of a metallocene catalyst, or are the product of reaction of the olefins or monomer(s) in the presence of a metallocene catalyst.

The inventors surprisingly discovered that when the olefinic monomers employed in catalyzed polymerization as the second monomeric component, are obtained from the Fisher-Tropsch process, the resultant polymers have very large domains of fundamental and/or application properties, and may be superior in some of these properties to those of polymers in which all the monomers have been obtained by conventional methods. The inventors believe that this unexpected behavior is due to very small amounts of the other olefinic components present in the Fischer Tropsch derived olefinic component and which until now have been regarded as impurities. These other olefinic components may be other hydrocarbons having one or more double bonds, whether linear, branched or aromatic, with the exception of those which poison the catalyst to the extent that it no longer polymerizes the monomers. The inventors further believe that these components may sometimes function to change the polydispersity in the polymers obtained according to this invention, thus improving the processability of these polymers. These components may selectively and/or partially and/or temporarily modify the initiation of ethylene polymerization or the insertion of the ethylene in the growing chain or the termination of polymerization, thereby changing the distribution of the comonomers in the polymer chain and/or the content level of the individual comonomers in the polymer and/or the length of branching of the polymer backbone and/or the molecular weight of the polymer and/or its molecular weight distribution, and/or its crystallizable sequence length and/or its morphology, with any one or more of these being reflected in unexpected application properties of the resultant polymers.

However, the inventors have also discovered that, for practical applications when the linear alpha olefinic monomers employed in the polymerization as the second monomeric component, are obtained from the Fisher-Tropsch process, the proportion of the other olefinic components referred to hereinbefore in the second monomer component is preferably within particular limits.

Thus, the amount of these other olefinic components present in the second monomeric component, when obtained from the Fisher-Tropsch process, may be from 0,002% to 2%, more preferably from 0,02% to 2%, and most preferably from 0,2% to 2%, based on the total mass of the monomeric component, ie given on a mass or weight basis. However it is to be noted that in particular cases the total amount of the other olefinic components in the monomeric component may be above the limits hereinbefore set out.

The ethylene may also be obtained from the Fischer-Tropsch process. However, due to the process of separation and purification involved in obtaining Fischer-Tropsch derived ethylene, polymers containing Fischer-Tropsch derived ethylene may, in certain cases, not show any difference to polymers containing ethylene obtained from conventional processes.

The second monomeric component or Fischer Tropsch derived comonomer may be a linear alpha olefin having a total number of carbon atoms between 5 and 9, leading thus to different groups of polymers. Typical examples of such high carbon number linear alpha olefins are 1-pentene, 1-hexene, 1-heptene, 1-octene and 1-nonene.

When the high carbon number linear alpha olefin is 1-pentene, the other olefinic impurities typically comprise mainly:

- 2-methyl-1-butene - up to 0,46%; and/or
- branched olefins having a carbon number of 5; and/or
- internal olefins having a carbon number of 5; and/or
- cyclic olefins having a carbon number of 5.

When the high carbon number linear alpha olefin is 1-hexene, the other olefinic impurities typically comprise mainly:

- branched olefins, mainly having a carbon number of 6 - up to 0,51%; and/or
- internal olefins, mainly having a carbon number of 6 - up to 0,18%; and/or
- cyclic olefins, mainly having a carbon number of 6 - up to 0,13%.

When the high carbon number linear olefin is 1-heptene, the other olefinic impurities typically comprise mainly:

- branched olefins, mainly having a carbon number of 7 - up to 0,48%; and/or
- internal olefins, mainly having a carbon number of 7 - up to 0,53%.

When the high carbon number linear alpha olefin is 1-octene, the other olefinic impurities typically comprise mainly:

- branched olefins, mainly having a carbon number of 8 - up to 0,41%; and/or
- internal olefins, mainly having a carbon number of 8 - up to 0,83%.

When the high carbon number linear alpha olefin is 1-nonene, the other olefinic impurities typically comprise mainly:

- branched olefins, mainly having a carbon number of 9 - up to 0,65%; and/or
- internal olefins, mainly having a carbon number of 9 - up to 0,51%.

More specifically, according to the first aspect of the invention, there is thus provided a polymer of ethylene as the first monomeric component, with a high carbon number linear alpha olefin having at least five carbon atoms as the second monomeric component and which is obtained from a Fischer-Tropsch process or is Fischer-Tropsch derived, with this polymer being obtained by copolymerization in the presence of a metallocene catalyst or being the reaction product of ethylene and the second monomeric component which is obtained from a Fischer-Tropsch process or is Fischer-Tropsch derived, in the presence of a metallocene catalyst.

The ratio of the molar proportion of the ethylene to the molar proportion of the comonomer or second monomeric component which is obtained from a Fischer Tropsch process or is Fischer Tropsch derived may be from 99,9: 0,1 to 80:20. The preferred ratio of the molar proportion is from 99,9:0,1 to 90:10. The most preferred ratio of the molar proportion is from 99,9:0,1 to 95:5.

Typical examples of Fischer-Tropsch derived olefins which can be used in the different embodiments of the invention are those as hereinbefore described in respect of this aspect of the invention, and which typically have levels of other olefinic components present therein as hereinbefore described.

Thus, in one embodiment of this aspect of the invention, the comonomer or Fischer-Tropsch derived second monomeric component may comprise from 0,002% to 2%, by mass, other olefinic components.

In another embodiment of this aspect of the invention, it may comprise from 0,02% to 2%, by mass, other olefinic components.

In yet another embodiment of this aspect of the invention, it may comprise from 0,2% to 2%, by mass, other olefinic components.

In a still further embodiment of this aspect of the invention, it may comprise from 0,2% to in excess of 2%, by mass, other olefinic components.

In particular, the polymer may be that obtained by reacting at least ethylene, with the comonomer or second monomeric component which is obtained from a Fischer Tropsch process or is Fischer Tropsch derived in one or more reaction zones, while maintaining in the reaction zone(s) a pressure in the range between atmospheric pressure and 5000kg/cm$^2$ and a temperature between ambient and 300°C, in the presence of a catalyst or catalyst system comprising a catalyst and a cocatalyst. The catalyst may, in particular, be a metallocene catalyst.

The inventors have surprisingly found that in the families of copolymers of ethylene with a high carbon number Fischer-Tropsch derived alpha olefin or second monomeric component which is obtained from a Fischer-Tropsch process or is Fischer-Tropsch derived, there can be found particular distinguishable subfamilies of polymers with a large range of unexpected properties dependent on the different second comonomers or olefinic components which are Fischer-Tropsch derived or obtained from a Fischer-Tropsch process, having different numbers of total carbon atoms, used.

The properties of the polymers in each family and subfamily group are determined mainly by the ratio of the proportion of ethylene to that of the second monomeric component which Fischer-Tropsch derived or obtained from a Fischer Tropsch process, and the amounts of the other olefinic components contained in the second monomeric component. In this manner, a large range of particular polymers can be obtained, having a large range of application properties controlled between certain limits. The resultant polymers are suitable for improved application in the main processing fields. Typical applications of the terpolymer include extrusions, blow moulding and injection moulding.

The polymer according to the first aspect of the invention for each embodiment hereinbefore described may have the following properties:

    a) a melt flow rate as measured according to ASTM D 1238 in the range of 0,01 to about 100g/10min; and/or
    b) a density measured according to ASTM D 1505 in the range of about 0,835 to about 0,950.

In a first version of each embodiment of this aspect of the invention, the polymer may be that obtained by the reaction of ethylene with 1-pentene

In a second version of each embodiment of this aspect of the invention, the polymer may be that obtained by the reaction of ethylene with 1-hexene

In a third version of each embodiment of this aspect of the invention, the polymer may be that obtained by the reaction of ethylene with 1-heptene

In a fourth version of each embodiment of this aspect of the invention, the polymer may be that obtained by the reaction of ethylene with 1-octene

In a fifth version of each embodiment of this aspect of the invention, the polymer may be that obtained by the reaction of ethylene with 1-nonene.

The inventors surprisingly discovered that the copolymers according to this invention are characterized by particular rheological properties.

Rheological analysis of the polymers were performed on a Physica MCR-500 rheometer with a parallel plate measuring system (25 mm diameter, 1mm gap), under controlled strain conditions (strain amplitude 1%) at a constant temperature for three particular temperatures (150°C, 160°C, 170°C). The Carreau-Gahleitner parameters of dynamic zero shear viscosity $\eta°$, dynamic infinite shear viscosity $\eta_{inf}$, characteristic relaxation time a and power exponents b, p and n were obtained using the rheology software.

The polymer may thus have a power exponent b which complies with the following equations, namely:

$$\text{At } 150°C, b \geq 0.0437[C] + 0.2013$$

$$\text{At } 160°C, b \geq 0.0308[C] + 0.2138$$

At 170°C, b ≥ 0.0308[C] + 0.2538,

where b is a Carreau-Gahleitner parameter, and [C] is the high carbon number linear alpha olefin content in mole percentage.

The polymer may have a power exponent p which complies with the following equations, namely:

At 150°C, p ≥ -1.2877[C] + 6.8666

At 160°C, p ≥ -1.1233[C] + 6.3942

At 170°C, p ≥ -1.1507[C] + 6.3063,

where p is a Carreau-Gahleitner parameter, and [C] is the high carbon number linear alpha olefin content in mole percentage.

The polymer may have a power exponent n which complies with the following equations, namely:

At 150°C, n ≥ 0.2995[C] - 0.8328

At 160°C, n ≥ 0.3011[C] - 0.8435

At 170°C, n ≥ 0.2942[C] - 0.8115

where n is a Carreau-Gahleitner parameter, and [C] is the high carbon number linear alpha olefin content in mole percentage.

The polymer may also comply with the following equations, namely:

At 150°C, $1/MFI \geq 1.5364e^{-1E-06\eta°}$

At 160°C, $1/MFI \geq 1.5486e^{-1E-06\eta°}$

At 170°C, $1/MFI \geq 1.5513e^{-1E-06\eta°}$

where MFI is the melt flow index and η° is the dynamic zero shear viscosity.

According to a second aspect of the invention, there is provided a process for producing a polymer, which comprises reacting at least a first monomeric component comprising ethylene and a second monomeric component comprising a high carbon number linear alpha olefin having at least five carbon atoms, and wherein at least one of the monomeric components is Fischer-Tropsch derived so that it contains also one or more other olefinic components, in one or more reaction zones, while maintaining the reaction zone(s) at a pressure between atmospheric pressure and 5000kg/cm$^2$, and at a temperature between ambient and 300°C, in the presence of a catalyst, or a catalyst system comprising a catalyst and a cocatalyst.

In a first embodiment of this aspect of the invention, the high carbon number linear alpha olefin may be added at the start of the reaction while the ethylene is added continuously during the course of the reaction.

In a second embodiment of this aspect of the invention, the reaction may be effected in a continuous fashion, with the ethylene being added continuously, and with the high carbon number linear alpha olefin being added continuously during the course of the reaction.

In a third embodiment of this aspect of the invention, the reaction may be effected in a continuous fashion, with the ethylene being added continuously, and with the high carbon number linear alpha olefin being added discontinuously during the course of the reaction.

In a fourth embodiment of this aspect of the invention, the reaction may be effected in a continuous fashion, with the ethylene being added discontinuously, and with the high carbon number linear alpha olefin being added continuously during the course of the reaction.

According to a third aspect of the invention, there is provided a polymer of ethylene as a first monomeric component, with a first high carbon number linear alpha olefin having at least five carbon atoms as a second monomeric component and with a second different high carbon number linear alpha olefin having at least four carbon atoms as a third monomeric component, with at least one of the monomeric components being Fischer-Tropsch derived so that it contains also at least one other olefinic component.

In other words, according to the third aspect of the invention, there is provided a polymer which is the reaction product of ethylene as a first monomeric component with a first high carbon number linear alpha olefin having at least five carbon atoms as a second monomeric component and at least one different high carbon number linear alpha olefin having at least four carbon atoms as a third monomeric component, with at least one of the monomeric components being Fischer-Tropsch derived.

Yet further, according to the third aspect of the invention, there is thus provided a terpolymer of ethylene as a first monomeric component with a first high carbon number linear alpha olefin having at least five carbon atoms as a second monomeric component and at least one different high carbon number linear alpha olefin having at least five carbon atoms as a third monomeric component, with at least one of the monomeric components being Fischer-Tropsch derived.

Still further, according to this aspect of the invention, there is provided a polymer of ethylene with at least two different high carbon number linear alpha olefins each having at least four carbon atoms.

The ratio of the molar proportion of the ethylene to the sum of the molar proportions of the high carbon number linear alpha olefins may be from 99,9:0,1 to 80:20. The preferred ratio of the molar proportions is from 99,9:0,1 to 90: 10. The most preferred ratio of the molar proportions is from 99,9:0,1 to 95:5.

Typical examples of Fischer-Tropsch derived high carbon number olefins which can be used in the different embodiments of the invention are those as hereinbefore described in respect of the first aspect of the invention, and which typically have levels of other olefinic components present therein as hereinbefore described.

Thus, in one embodiment of this aspect of the invention, each Fischer-Tropsch derived monomeric component may comprise from 0,002% to 2%, by mass, other olefinic components.

In another embodiment of this aspect of the invention, it may comprise from 0,02% to 2%, by mass, other olefinic components.

In yet another embodiment of this aspect of the invention, it may comprise from 0,2% to 2%, by mass, other olefinic components.

In a still further embodiment of this aspect of the invention, it may comprise from 0,2% to in excess of 2%, by mass, other olefinic components.

In particular, the polymer may be that obtained by reacting ethylene, with two or more high carbon number linear alpha olefins or components of which at least one is Fischer-Tropsch derived, in one or more reaction zones, while maintaining in the reaction zone(s) a pressure in the range between atmospheric pressure and 5000kg/cm$^2$ and a temperature between ambient and 300°C, in the presence of a metallocene catalyst.

The inventors have surprisingly found that in the family of terpolymers of ethylene with two or more high carbon number linear alpha olefins or components of which at least one is Fischer-Tropsch derived, there can be found particular distinguishable groups of polymers with a large range of unexpected properties dependent on the different Fischer-Tropsch derived comonomers or monomeric components, having different numbers of total carbon atoms, used.

The properties of the terpolymers in each family and subfamily group are determined mainly by the ratio of the proportion of ethylene to the sum of the comonomers or Fischer-Tropsch derived monomeric components, and the amounts of the other olefinic components contained in the Fischer-Tropsch derived monomeric components.

However the properties are also determined by the ratio of molar proportions of the different high carbon number linear alpha olefins of which at least one is Fischer-Tropsch derived.

The ratio of the molar proportions of the different high carbon number linear alpha olefins of which at least one is Fischer-Tropsch derived may be from 0,1:99,9 to 99,9:0.1, more preferably from 1:99 to 99:1, and more preferably from 2:98 to 98:2.

In this manner, an even larger range of particular polymers can be obtained than in the first aspect of the invention, having a large range of application properties controlled between certain limits. The resultant polymers are suitable for improved application in the main processing fields. Typical applications of the terpolymer include extrusions, blow moulding and injection moulding.

The polymer according to the third aspect of the invention for each embodiment hereinbefore described may have the following properties:

a) a melt flow rate as measured according to ASTM D 1238 in the range of 0,01 to about 100g/10min; and/or

b) a density as measured according to ASTM D 1505 in the range of about 0,835 to about 0,950.

In a first version of each embodiment of this aspect of the invention, the polymer may be that obtained by the reaction of ethylene with 1-pentene and a third different alpha olefin.

In a second version of each embodiment of this aspect of the invention, the polymer may be that obtained by the reaction of ethylene with 1-hexene and a third different alpha olefin.

In a third version of each embodiment of this aspect of the invention, the polymer may be that obtained by the reaction of ethylene with 1-heptene and a third different alpha olefin .

In a fourth version of each embodiment of this aspect of the invention, the polymer may be that obtained by the reaction of ethylene with 1-octene and a third different alpha olefin.

In a fifth version of each embodiment of this aspect of the invention, the polymer may be that obtained by the reaction of ethylene with 1-nonene and a third different alpha olefin.

The inventors surprisingly discovered that the terpolymers according to this aspect of the invention are characterized by particular rheological properties.

The terpolymer may have a power exponent b which complies with the following equations:

$$\text{At } 150^\circ\text{C, } b \geq 0.037[C] + 0.2052$$

$$\text{At } 160^\circ\text{C, } b \geq 0.0395[C] + 0.2342$$

$$\text{At } 170^\circ\text{C, } b \geq 0.0494[C] + 0.2202,$$

where b is a Carreau-Gahleitner parameter, and [C] is the high carbon number linear alpha olefin content in mole percentage.

The terpolymer may have a power exponent p which complies with the following equations:

$$\text{At } 150^\circ\text{C, } p \geq -0.4075[C] + 3.4135$$

$$\text{At } 160^\circ\text{C, } p \geq -0.5016[C] + 3.732$$

$$\text{At } 170^\circ\text{C, } p \geq -0.9091[C] + 5.3455$$

where p is a Carreau-Gahleitner parameter, and [C] is the high carbon number linear alpha olefin content in mole percentage.

The terpolymer may have a power exponent n which complies with the following equations:

$$\text{At } 150^\circ\text{C, } n \geq 0.1\,69[C] - 0.3439$$

$$\text{At } 160^\circ\text{C, } n \geq 0.1765[C] - 0.4004$$

$$\text{At } 170^\circ\text{C, } n \geq 0.242[C] - 0.6489$$

where n is a Carreau-Gahleitner parameter, and [C] is the high carbon number linear alpha olefin content in mole percentage.

The terpolymer may comply with the following equations:

$$\text{At } 150^\circ\text{C, } 1/MFI \geq 0.123e^{2E\text{-}05\eta^\circ}$$

At 160°C, $1/MFI \geq 0.1239e^{2E-05\eta°}$

At 170°C, $1/MFI \geq 0.1275e^{2E-05\eta°}$,

where MFI is the melt flow index and $\eta°$ is the dynamic zero shear viscosity.

The terpolymer according to this aspect of the invention, may be that that obtained by reacting at least ethylene, the first high carbon number linear alpha olefin and the different high carbon number linear alpha olefin in one or more reaction zones, while maintaining the reaction zone(s) at a pressure between atmospheric pressure and 5000kg/cm$^2$, and at a temperature between ambient and 300°C, in the presence of a catalyst, or a catalyst system comprising a catalyst and a cocatalyst.

The catalyst may, in particular, be a metallocene catalyst.

According to a fourth aspect of the invention, there is provided a process for producing a polymer, which comprises reacting at least ethylene as a first monomeric component, a first high carbon number linear alpha olefin having at least five carbon atoms as a second monomeric component and a different high carbon number linear alpha olefin having at least four carbon atoms as third monomeric component, with at least one of the monomeric components being Fischer-Tropsch derived so that it contains also one or more other olefinic components, in one or more reaction zones, while maintaining the reaction zone(s) at a pressure between atmospheric pressure and 5000kg/cm$^2$, and at a temperature between ambient and 300°C, in the presence of a catalyst, or a catalyst system comprising a catalyst and a cocatalyst.

The catalyst may, in particular, be a metallocene catalyst.

In a first embodiment of this aspect of the invention, the high carbon number linear alpha olefins may be added simultaneously at the start of the reaction, while the ethylene is added continuously during the course of the reaction.

In a second embodiment of this aspect of the invention, one of the high carbon number linear alpha olefins may be added at the start of the reaction while ethylene is added continuously during the reaction, with a continuous or discontinuous supply of the other high carbon number linear alpha olefin being provided, and with no product being removed during the reaction.

In a third embodiment of this aspect of the invention, the reaction may be effected in a continuous fashion, with the ethylene being added continuously, and with the high carbon number linear alpha olefins being added together and continuously during the course of the reaction.

In a fourth embodiment of this aspect of the invention, the reaction may be effected in a continuous fashion, with the ethylene being added continuously, and with the high carbon number linear alpha olefins being added separately and continuously during the course of the reaction.

In a fifth embodiment of this aspect of the invention, the reaction may be effected in a continuous fashion, with the ethylene being added continuously, and with the high carbon number linear alpha olefins being added together but discontinuously during the course of the reaction.

In a sixth embodiment of this aspect of the invention, the reaction is effected in a continuous fashion, with the ethylene being added continuously, and with the high carbon number linear alpha olefins being added separately and discontinuously during the course of the reaction.

Any suitable metallocene catalyst for ethylene polymerization can, at least in principle, be used. Examples of metallocenes which can be used are Group IV transition metallocenes (titanocenes, zirconocenes, hafnocenes), which are characterized by two bulky cyclopentadienyl (Cp) or substituted cyclopentadienyl ligands (Cp) were the substituent may be linear or branched alkyl groups, substituted and un-substituted aromatic and cyclic aliphatic groups, metallocenes with two Cp ligands arranged in a chiral array and which may be connected together with chemical bonds by a bridging group. The bridging group may be a linear, branched or aromatic or aliphatic carbon containing from 1 to 50 carbon atoms, germanium or silyl groups substituted with linear or branched alkyl groups, substituted and un-substituted aromatic and cyclic aliphatic groups. Table 1 shows a non-limiting list of metallocenes which can in principle be used.

Table 1.

| List of Metallocenes | |
|---|---|
| $Cp_2ZrCl_2$ | $(Me_2Cp)_2ZrMe_2$ |
| $(n\text{-}BuCp)_2ZrCl_2$ | $(Me_5Cp)_2ZrMe_2$ |
| $(t\text{-}BuCp)_2ZrCl_2$ | $Cp_2ZrClMe$ |

Table 1.   (continued)

| List of Metallocenes | |
|---|---|
| $(i\text{-}BuCp)_2ZrCl_2$ | $(n\text{-}BuCp)_2ZrClMe$ |
| $(n\text{-}Bu_2Cp)_2ZrCl_2$ | $(t\text{-}BuCp)_2ZrClMe$ |
| $(t\text{-}Bu_2Cp)_2ZrCl_2$ | $(i\text{-}BuCp)_2ZrClMe$ |
| $(i\text{-}Bu_2Cp)_2ZrCl_2$ | $(n\text{-}Bu_2Cp)_2ZrClMe$ |
| $(n\text{-}Bu_5Cp)_2ZrCl_2$ | $(t\text{-}Bu_2Cp)_2ZrClMe$ |
| $(t\text{-}Bu_5Cp)_2ZrCl_2$ | $(i\text{-}Bu_2Cp)_2ZrClMe$ |
| $(i\text{-}Bu_5Cp)_2ZrCl_2$ | $(n\text{-}Bu_5Cp)_2ZrClMe$ |
| $(n\text{-}PrCp)_2ZrCl_2$ | $(t\text{-}Bu_5Cp)_2ZrClMe$ |
| $(t\text{-}PrCp)_2ZrCl_2$ | $(i\text{-}Bu_5Cp)_2ZrClMe$ |
| $(i\text{-}PrCp)_2ZrCl_2$ | $(n\text{-}PrCp)_2ZrClMe$ |
| $(n\text{-}Pr_2Cp)_2ZrCl_2$ | $(t\text{-}PrCp)_2ZrClMe$ |
| $(t\text{-}Pr_2Cp)_2ZrCl_2$ | $(i\text{-}PrCp)_2ZrClMe$ |
| $(i\text{-}Pr_2Cp)_2ZrCl_2$ | $(n\text{-}Pr_2Cp)_2ZrClMe$ |
| $(n\text{-}Pr_5Cp)_2ZrCl_2$ | $(t\text{-}Pr_2Cp)_2ZrClMe$ |
| $(t\text{-}Pr_5Cp)_2ZrCl_2$ | $(i\text{-}Pr_2Cp)_2ZrClMe$ |
| $(i\text{-}Pr_5Cp)_2ZrCl_2$ | $(n\text{-}Pr_5Cp)_2ZrClMe$ |
| $(PhCp)_2ZrCl_2$ | $(t\text{-}Pr_5Cp)_2ZrClMe$ |
| $(Ph_2Cp)_2ZrCl_2$ | $(i\text{-}Pr_5Cp)_2ZrClMe$ |
| $(MeCp)_2ZrCl_2$ | $(PhCp)_2ZrClMe$ |
| $(Me_2Cp)_2ZrCl_2$ | $(Ph_2Cp)_2ZrClMe$ |
| $(Me_5Cp)_2ZrCl_2$ | $(MeCp)_2ZrClMe$ |
| $Cp_2ZrMe_2$ | $(Me_2Cp)_2ZrClMe$ |
| $(n\text{-}BuCp)_2ZrMe_2$ | $(Me_5Cp)_2ZrClMe$ |
| $(t\text{-}BuCp)_2ZrMe_2$ | $Cp_2TiCl_2$ |
| $(i\text{-}BuCp)_2ZrMe_2$ | $(n\text{-}BuCp)_2TiCl_2$ |
| $(n\text{-}Bu_2Cp)_2ZrMe_2$ | $(t\text{-}BuCp)_2TiCl_2$ |
| $(t\text{-}Bu_2Cp)_2ZrMe_2$ | $(i\text{-}BuCp)_2TiCl_2$ |
| $(i\text{-}Bu_2Cp)_2ZrMe_2$ | $(n\text{-}Bu_2Cp)_2TiCl_2$ |
| $(n\text{-}Bu_5Cp)_2ZrMe_2$ | $(t\text{-}Bu_2Cp)_2TiCl_2$ |
| $(t\text{-}Bu_5Cp)_2ZrMe_2$ | $(i\text{-}Bu_2Cp)_2TiCl_2$ |
| $(i\text{-}Bu_5Cp)_2ZrMe_2$ | $(n\text{-}Bu_5Cp)_2TiCl_2$ |
| $(n\text{-}PrCp)_2ZrMe_2$ | $(t\text{-}Bu_5Cp)_2TiCl_2$ |
| $(t\text{-}PrCp)_2ZrMe_2$ | $(i\text{-}Bu_5Cp)_2TiCl_2$ |
| $(i\text{-}PrCp)_2ZrMe_2$ | $(n\text{-}PrCp)_2TiCl_2$ |
| $(n\text{-}Pr_2Cp)_2ZrMe_2$ | $(t\text{-}PrCp)_2TiCl_2$ |
| $(t\text{-}Pr_2Cp)_2ZrMe_2$ | $(i\text{-}PrCp)_2TiCl_2$ |
| $(i\text{-}Pr_2Cp)_2ZrMe_2$ | $(n\text{-}Pr_2Cp)_2TiCl_2$ |
| $(n\text{-}Pr_5Cp)_2ZrMe_2$ | $(t\text{-}Pr_2Cp)_2TiCl_2$ |
| $(t\text{-}Pr_5Cp)_2ZrMe_2$ | $(i\text{-}Pr_2Cp)_2TiCl_2$ |
| $(i\text{-}Pr_5Cp)_2ZrMe_2$ | $(n\text{-}Pr_5Cp)_2TiCl_2$ |
| $(PhCp)_2ZrMe_2$ | $(t\text{-}Pr_5Cp)_2TiCl_2$ |
| $(Ph_2Cp)_2ZrMe_2$ | $(i\text{-}Pr_5Cp)_2TiCl_2$ |
| $(MeCp)_2ZrMe_2$ | $(PhCp)_2TiCl_2$ |
| $(Ph_2Cp)_2TiCl_2$ | $(t\text{-}Pr_5Cp)_2TiClMe$ |
| $(MeCp)_2TiCl_2$ | $(i\text{-}Pr_5Cp)_2TiClMe$ |
| $(Me_2Cp)_2TiCl_2$ | $(PhCp)_2TiClMe$ |
| $(Me_5Cp)_2TiCl_2$ | $(Ph_2Cp)_2TiClMe$ |
| $Cp_2TiMe_2$ | $(MeCp)_2TiClMe$ |
| $(n\text{-}BuCp)_2TiMe_2$ | $(Me_2Cp)_2TiClMe$ |
| $(t\text{-}BuCp)_2TiMe_2$ | $(Me_5Cp)_2TiClMe$ |

Table 1.  (continued)

| List of Metallocenes | |
| --- | --- |
| (i-BuCp)$_2$TiMe$_2$ | Cp$_2$HfCl$_2$ |
| (n-Bu$_2$Cp)$_2$TiMe$_2$ | (n-BuCp)$_2$HfCl$_2$ |
| (t-Bu$_2$Cp)$_2$TiMe$_2$ | (t-BuCp)$_2$HfCl$_2$ |
| (i-Bu$_2$Cp)$_2$TiMe$_2$ | (i-BuCp)$_2$HfCl$_2$ |
| (n-Bu$_5$Cp)$_2$TiMe$_2$ | (n-Bu$_2$Cp)$_2$HfCl$_2$ |
| (t-Bu$_5$Cp)$_2$TiMe$_2$ | (t-Bu$_2$Cp)$_2$HfCl$_2$ |
| (i-Bu$_5$Cp)$_2$TiMe$_2$ | (i-Bu$_2$Cp)$_2$HfCl$_2$ |
| (n-PrCp)$_2$TiMe$_2$ | (n-Bu$_5$Cp)$_2$HfCl$_2$ |
| (t-PrCp)$_2$TiMe$_2$ | (t-Bu$_5$Cp)$_2$HfCl$_2$ |
| (i-PrCp)$_2$TiMe$_2$ | (i-Bu$_5$Cp)$_2$HfCl$_2$ |
| (n-Pr$_2$Cp)$_2$TiMe$_2$ | (n-PrCp)$_2$HfCl$_2$ |
| (t-Pr$_2$Cp)$_2$TiMe$_2$ | (t-PrCp)$_2$HfCl$_2$ |
| (i-Pr$_2$Cp)$_2$TiMe$_2$ | (i-PrCp)$_2$HfCl$_2$ |
| (n-Pr$_5$Cp)$_2$TiMe$_2$ | (n-Pr$_2$Cp)$_2$HfCl$_2$ |
| (t-Pr$_5$Cp)$_2$TiMe$_2$ | (t-Pr$_2$Cp)$_2$HfCl$_2$ |
| (i-Pr$_5$Cp)$_2$TiMe$_2$ | (i-Pr$_2$Cp)$_2$HfCl$_2$ |
| (PhCp)$_2$TiMe$_2$ | (n-Pr$_5$Cp)$_2$HfCl$_2$ |
| (Ph$_2$Cp)$_2$TiMe$_2$ | (t-Pr$_5$Cp)$_2$HfCl$_2$ |
| (MeCp)$_2$TiMe$_2$ | (i-Pr$_5$Cp)$_2$HfCl$_2$ |
| (Me$_2$Cp)$_2$TiMe$_2$ | (PhCp)$_2$HfCl$_2$ |
| (Me$_5$Cp)$_2$TiMe$_2$ | (Ph$_2$Cp)$_2$HfCl$_2$ |
| Cp$_2$TiClMe | (MeCp)$_2$HfCl$_2$ |
| (n-BuCp)$_2$TiClMe | (Me$_2$Cp)$_2$HfCl$_2$ |
| (t-BuCp)$_2$TiClMe | (Me$_5$Cp)$_2$HfCl$_2$ |
| (i-BuCp)$_2$TiClMe | Cp$_2$HfMe$_2$ |
| (n-Bu$_2$Cp)$_2$TiClMe | (n-BuCp)$_2$HfMe$_2$ |
| (t-Bu$_2$Cp)$_2$TiClMe | (t-BuCp)$_2$HfMe$_2$ |
| (i-Bu$_2$Cp)$_2$TiClMe | (i-BuCp)$_2$HfMe$_2$ |
| (n-Bu$_5$Cp)$_2$TiClMe | (n-Bu$_2$Cp)$_2$HfMe$_2$ |
| (t-Bu$_5$Cp)$_2$TiClMe | (t-Bu$_2$Cp)$_2$HfMe$_2$ |
| (i-Bu$_5$Cp)$_2$TiClMe | (i-Bu$_2$Cp)$_2$HfMe$_2$ |
| (n-PrCp)$_2$TiClMe | (n-Bu$_5$Cp)$_2$HfMe$_2$ |
| (t-PrCp)$_2$TiClMe | (t-Bu$_5$Cp)$_2$HfMe$_2$ |
| (i-PrCp)$_2$TiClMe | (i-Bu$_5$Cp)$_2$HfMe$_2$ |
| (n-Pr$_2$Cp)$_2$TiClMe | (n-PrCp)$_2$HfMe$_2$ |
| (t-Pr$_2$Cp)$_2$TiClMe | (t-PrCp)$_2$HfMe$_2$ |
| (i-Pr$_2$Cp)$_2$TiClMe | (i-PrCp)$_2$HfMe$_2$ |
| (n-Pr$_5$Cp)$_2$TiClMe | (n-Pr$_2$Cp)$_2$HfMe$_2$ |
| (t-Pr$_2$Cp)$_2$HfMe$_2$ | [O(SiMe$_2$Cp)$_2$]TiCl$_2$ |
| (i-Pr$_2$Cp)$_2$HfMe$_2$ | [O(SiMe$_2$ t-BuCp)$_2$]TiCl$_2$ |
| (n-Pr$_5$Cp)$_2$HfMe$_2$ | Ind$_2$HfCl$_2$ |
| (t-Pr$_5$Cp)$_2$HfMe$_2$ | (2-MeInd)$_2$HfCl$_2$ |
| (i-Pr$_5$Cp)$_2$HfMe$_2$ | (neomenthylCp)$_2$HfCl$_2$ |
| (PhCp)$_2$HfMe$_2$ | (C$_5$Me$_4$Et)$_2$HfCl$_2$ |
| (Ph$_2$Cp)$_2$HfMe$_2$ | [O(SiMe$_2$Cp)$_2$]HfCl$_2$ |
| (MeCp)$_2$HfMe$_2$ | [O(SiMe$_2$ t-BuCp)$_2$]HfCl$_2$ |
| (Me$_2$Cp)$_2$HfMe$_2$ | Ind$_2$ZrClMe |
| (Me$_5$Cp)$_2$HfMe$_2$ | (2-MeInd)$_2$ZrClMe |
| Cp$_2$HfClMe | (neomenthylCp)$_2$ZrClMe |
| (n-BuCp)$_2$HfClMe | (C$_5$Me$_4$Et)$_2$ZrClMe |

Table 1.   (continued)

| List of Metallocenes | |
|---|---|
| (t-BuCp)$_2$HfClMe | [O(SiMe$_2$Cp)$_2$]ZrClMe |
| (i-BuCp)$_2$HfClMe | [O(SiMe$_2$ t-BuCp)$_2$]ZrClMe |
| (n-Bu$_2$Cp)$_2$HfClMe | Ind$_2$TiClMe |
| (t-Bu$_2$Cp)$_2$HfClMe | (2-MeInd)$_2$TiClMe |
| (i-Bu$_2$Cp)$_2$HfClMe | (neomenthylCp)$_2$TiClMe |
| (n-Bu$_5$Cp)$_2$HfClMe | (C$_5$Me$_4$Et)$_2$TiClMe |
| (t-Bu$_5$Cp)$_2$HfClMe | [O(SiMe$_2$Cp)$_2$]TiClMe |
| (i-Bu$_5$Cp)$_2$HfClMe | [O(SiMe$_2$ t-BuCp)$_2$]TiClMe |
| (n-PrCp)$_2$HfClMe | Ind$_2$HfClMe |
| (t-PrCp)$_2$HfClMe | (2-MeInd)$_2$HfClMe |
| (i-PrCp)$_2$HfClMe | (neomenthylCp)$_2$HfClMe |
| (n-Pr$_2$Cp)$_2$HfClMe | (C$_5$Me$_4$Et)$_2$HfClMe |
| (t-Pr$_2$Cp)$_2$HfClMe | [O(SiMe$_2$Cp)$_2$]HfClMe |
| (i-Pr$_2$Cp)$_2$HfClMe | [O(SiMe$_2$ t-BuCp)$_2$]HfClMe |
| (n-Pr$_5$Cp)$_2$HfClMe | Ind$_2$ZrMe$_2$ |
| (t-Pr$_5$Cp)$_2$HfClMe | (2-MeInd)$_2$ZrMe$_2$ |
| (i-Pr$_5$Cp)$_2$HfClMe | (neomenthylCp)$_2$ZrMe$_2$ |
| (PhCp)$_2$HfClMe | (C$_5$Me$_4$Et)$_2$ZrMe$_2$ |
| (Ph$_2$Cp)$_2$HfClMe | [O(SiMe$_2$Cp)$_2$]ZrMe$_2$ |
| (MeCp)$_2$HfClMe | [O(SiMe$_2$ t-BuCp)$_2$]ZrMe$_2$ |
| (Me$_2$Cp)$_2$HfClMe | Ind$_2$TiMe$_2$ |
| (Me$_5$Cp)$_2$HfClMe | (2-MeInd)$_2$TiMe$_2$ |
| Ind$_2$ZrCl$_2$ | (neomenthylCp)$_2$TiMe$_2$ |
| (2-MeInd)$_2$ZrCl$_2$ | (C$_5$Me$_4$Et)$_2$TiMe$_2$ |
| (neomenthylCp)$_2$ZrCl$_2$ | [O(SiMe$_2$Cp)$_2$]TiMe$_2$ |
| (C$_5$Me$_4$Et)$_2$ZrCl$_2$ | [O(SiMe$_2$ t-BuCp)$_2$]TiMe$_2$ |
| [O(SiMe$_2$Cp)$_2$]ZrCl$_2$ | Ind$_2$HfMe$_2$ |
| [O(SiMe$_2$ t-BuCp)$_2$]ZrCl$_2$ | (2-MeInd)$_2$HfMe$_2$ |
| Ind$_2$TiCl$_2$ | (neomenthylCp)$_2$HfMe$_2$ |
| (2-MeInd)$_2$TiCl$_2$ | (C$_5$Me$_4$Et)$_2$HfMe$_2$ |
| (neomenthylCp)$_2$TiCl$_2$ | [O(SiMe$_2$Cp)$_2$]HfMe$_2$ |
| (C$_5$Me$_4$Et)$_2$TiCl$_2$ | [O(SiMe$_2$ t-BuCp)$_2$]HfMe$_2$ |
| [En(Ind)$_2$]ZrCl$_2$ | [Me$_2$Si(IndFlu)]HfCl$_2$ |
| [En(Ind)$_2$]HfCl$_2$ | [Me$_2$Si(IndFlu)]TiCl$_2$ |
| [En(Ind)$_2$]TiCl$_2$ | [Me$_2$Si(IndFlu)]ZrMe$_2$ |
| [En(Ind)$_2$]ZrMe$_2$ | [Me$_2$Si(IndFlu)]HfMe$_2$ |
| [En(Ind)$_2$]HfMe$_2$ | [Me$_2$Si(IndFlu)]TiMe$_2$ |
| [En(Ind)$_2$]TiMe$_2$ | [Me$_2$Si(IndFlu)]ZrClMe |
| [En(Ind)$_2$]ZrClMe | [Me$_2$Si(IndFlu)]HfClMe |
| [En(Ind)$_2$]HfClMe | [Me$_2$Si(IndFlu)]TiClMe |
| [En(Ind)$_2$]TiClMe | [Bz$_2$Si(IndFlu)]ZrCl$_2$ |
| [Me$_2$Si(Ind)$_2$]ZrCl$_2$ | [Bz$_2$Si(IndFlu)]HfCl$_2$ |
| [Me$_2$Si(Ind)$_2$]HfCl$_2$ | [Bz$_2$Si(IndFlu)]TiCl$_2$ |
| [Me$_2$Si(Ind)$_2$]TiCl$_2$ | [Bz$_2$Si(IndFlu)]ZrMe$_2$ |
| [Me$_2$Si(Ind)$_2$]ZrMe$_2$ | [Bz$_2$Si(IndFlu)]HfMe$_2$ |
| [Me$_2$Si(Ind)$_2$]HfMe$_2$ | [Bz$_2$Si(IndFlu)]TiMe$_2$ |
| [Me$_2$Si(Ind)$_2$]TiMe$_2$ | [Bz$_2$Si(IndFlu)]ZrClMe |
| [Me$_2$Si(Ind)$_2$]ZrClMe | [Bz$_2$Si(IndFlu)]HfClMe |
| [Me$_2$Si(Ind)$_2$]HfClMe | [Bz$_2$Si(IndFlu)]TiClMe |
| [Me$_2$Si(Ind)$_2$]TiClMe | [Bimethyl Naphtyl(IndFlu)]ZrCl$_2$ |

Table 1. (continued)

| List of Metallocenes | |
|---|---|
| [Bz$_2$Si(Ind)$_2$]ZrCl$_2$ | [Bimethyl Naphtyl(IndFlu)]HfCl$_2$ |
| [Bz$_2$Si(Ind)$_2$]HfCl$_2$ | [Bimethyl Naphtyl(IndFlu)]TiCl$_2$ |
| [Bz$_2$Si(Ind)$_2$]TiCl$_2$ | [Bimethyl Naphtyl(IndFlu)]ZrMe$_2$ |
| [Bz$_2$Si(Ind)$_2$]ZrMe$_2$ | [Bimethyl Naphtyl(IndFlu)]HfMe$_2$ |
| [Bz$_2$Si(Ind)$_2$]HfMe$_2$ | [Bimethyl Naphtyl(IndFlu)]TiMe$_2$ |
| [Bz$_2$Si(Ind)$_2$]TiMe$_2$ | [Bimethyl Naphtyl(IndFlu)]ZrClMe |
| [Bz$_2$Si(Ind)$_2$]ZrClMe | [Bimethyl Naphtyl(IndFlu)]HfClMe |
| [Bz$_2$Si(Ind)$_2$]HfClMe | [Bimethyl Naphtyl(IndFlu)]TiClMe |
| [Bz$_2$Si(Ind)$_2$]TiClMe | [En(BenzIndFlu)]ZrCl$_2$ |
| [Bimethyl Naphtyl(Ind)$_2$]ZrCl$_2$ | [En(BenzIndFlu)]HfCl$_2$ |
| [Bimethyl Naphtyl(Ind)$_2$]HfCl$_2$ | [En(BenzIndFlu)]TiCl$_2$ |
| [Bimethyl Naphtyl(Ind)$_2$]TiCl$_2$ | [En(BenzIndFlu)]ZrMe$_2$ |
| [Bimethyl Naphtyl(Ind)$_2$]ZrMe$_2$ | [En(BenzIndFlu)]HfMe$_2$ |
| [Bimethyl Naphtyl(Ind)$_2$]HfMe$_2$ | [En(BenzIndFlu)]TiMe$_2$ |
| [Bimethyl Naphtyl(Ind)$_2$]TiMe$_2$ | [En(BenzIndFlu)]ZrClMe |
| [Bimethyl Naphtyl(Ind)$_2$]ZrClMe | [En(BenzIndFlu)]HfClMe |
| [Bimethyl Naphtyl(Ind)$_2$]HfClMe | [En(BenzIndFlu)]TiClMe |
| [Bimethyl Naphtyl(Ind)$_2$]TiClMe | [Me$_2$Si(BenzIndFlu)]ZrCl$_2$ |
| [En(IndFlu)]ZrCl$_2$ | [Me$_2$Si(BenzIndFlu)HfCl$_2$ |
| [En(IndFlu)]HfCl$_2$ | [Me$_2$Si(BenzIndFlu)]TiCl$_2$ |
| [En(IndFlu)]TiCl$_2$ | [Me$_2$Si(BenzIndFlu)]ZrMe$_2$ |
| [En(IndFlu)]ZrMe$_2$ | [Me$_2$Si(BenzIndFlu)]HfMe$_2$ |
| [En(IndFlu)]HfMe$_2$ | [Me$_2$Si(BenzIndFlu)]TiMe$_2$ |
| [En(IndFlu)]TiMe$_2$ | [Me$_2$Si(BenzIndFlu)]ZrClMe |
| [En(IndFlu)]ZrClMe | [Me$_2$Si(BenzIndFlu)]HfClMe |
| [En(IndFlu)]HfClMe | [Me$_2$Si(BenzIndFlu)]TiClMe |
| [En(IndFlu)]TiClMe | [Bz$_2$Si(BenzIndFlu)]ZrCl$_2$ |
| [Me$_2$Si(IndFlu)]ZrCl$_2$ | [Bz$_2$Si(BenzIndFlu)]HfCl$_2$ |
| [Bz$_2$Si(BenzIndFlu)]TiCl$_2$ | [Bimethyl Naphtyl(IndCp)]ZrMe$_2$ |
| [Bz$_2$Si(BenzIndFlu)]ZrMe$_2$ | [Bimethyl Naphtyl(IndCp)]HfMe$_2$ |
| [Bz$_2$Si(BenzIndFlu)]HfMe$_2$ | [Bimethyl Naphtyl(IndCp)]TiMe$_2$ |
| [Bz$_2$Si(BenzIndFlu)]TiMe$_2$ | [Bimethyl Naphtyl(IndCp)]ZrClMe |
| [Bz$_2$Si(BenzIndFlu)]ZrClMe | [Bimethyl Naphtyl(IndCp)]HfClMe |
| [Bz$_2$Si(BenzIndFlu)]HfClMe | [Bimethyl Naphtyl(IndCp)]TiClMe |
| [Bz$_2$Si(BenzIndFlu)]TiClMe | [En(FluCp)]ZrCl$_2$ |
| [Bimethyl Naphtyl(BenzIndFlu)]ZrCl$_2$ | [En(FluCp)]HfCl$_2$ |
| [Bimethyl Naphtyl(BenzIndFlu)]HfCl$_2$ | [En(FluCp)]TiCl$_2$ |
| [Bimethyl Naphtyl(BenzIndFlu)]TiCl$_2$ | [En(FluCp)]ZrMe$_2$ |
| [Bimethyl | [En(FluCp)]HfMe$_2$ |
| Naphtyl(BenzIndFlu)]ZrMe$_2$ | [En(FluCp)]TiMe$_2$ |
| [Bimethyl | [En(FluCp)]ZrClMe |
| Naphtyl(BenzIndFlu)]HfMe$_2$ | [En(FluCp)]HfClMe |
| [Bimethyl | [En(FluCp)]TiClMe |
| Naphtyl(BenzIndFlu)]TiMe$_2$ | [Me$_2$Si(FluCp)]ZrCl$_2$ |
| [Bimethyl | [Me$_2$Si(FluCp)]HfCl$_2$ |
| Naphtyl(BenzIndFlu)]ZrClMe | [Me$_2$Si(FluCp)]TiCl$_2$ |
| [Bimethyl | [Me$_2$Si(FluCp)]ZrMe$_2$ |
| Naphtyl(BenzIndFlu)]HfClMe | [Me$_2$Si(FluCp)]HfMe$_2$ |
| [Bimethyl | [Me$_2$Si(FluCp)]TiMe$_2$ |
| Naphtyl(BenzIndFlu)]TiClMe | [Me$_2$Si(FluCp)]ZrClMe |

Table 1.   (continued)

| List of Metallocenes | |
|---|---|
| [En(IndCp)]ZrCl$_2$ | [Me$_2$Si(FluCp)]HfClMe |
| [En(IndCp)]HfCl$_2$ | [Me$_2$Si(FluCp)]TiClMe |
| [En(IndCp)]TiCl$_2$ | [Bz$_2$Si(FluCp)]ZrCl$_2$ |
| [En(IndCp)]ZrMe$_2$ | [Bz$_2$Si(FluCp)]HfCl$_2$ |
| [En(IndCp)]HfMe$_2$ | [Bz$_2$Si(FluCp)]TiCl$_2$ |
| [En(IndCp)]TiMe$_2$ | [Bz$_2$Si(FluCp)]ZrMe$_2$ |
| [En(IndCp)]ZrClMe | [Bz$_2$Si(FluCp)]HfMe$_2$ |
| [En(IndCp)]HfClMe | [Bz$_2$Si(FluCp)]TiMe$_2$ |
| [En(IndCp)]TiClMe | [Bz$_2$Si(FluCp)]ZrClMe |
| [Me$_2$Si(IndCp)]ZrCl$_2$ | [Bz$_2$Si(FluCp)]HfClMe |
| [Me$_2$Si(IndCp)]HfCl$_2$ | [Bz$_2$Si(FluCp)]TiClMe |
| [Me$_2$Si(IndCp)]TiCl$_2$ | [Bimethyl Naphtyl(FluCp)]ZrCl$_2$ |
| [Me$_2$Si(IndCp)]ZrMe$_2$ | [Bimethyl Naphtyl(FluCp)]HfCl$_2$ |
| [Me$_2$Si(IndCp)]HfMe$_2$ | [Bimethyl Naphtyl(FluCp)]TiCl$_2$ |
| [Me$_2$Si(IndCp)]TiMe$_2$ | [Bimethyl Naphtyl(FluCp)]ZrMe$_2$ |
| [Me$_2$Si(IndCp)]ZrClMe | [Bimethyl Naphtyl(FluCp)]HfMe$_2$ |
| [Me$_2$Si(IndCp)]HfClMe | [Bimethyl Naphtyl(FluCp)]TiMe$_2$ |
| [Me$_2$Si(IndCp)]TiClMe | [Bimethyl Naphtyl(FluCp)]ZrClMe |
| [Bz$_2$Si(IndCp)]ZrCl$_2$ | [Bimethyl Naphtyl(FluCp)]HfClMe |
| [Bz$_2$Si(IndCp)]HfCl$_2$ | [Bimethyl Naphtyl(FluCp)]TiClMe |
| [Bz$_2$Si(IndCp)]TiCl$_2$ | [En(IndH$_4$)$_2$]ZrCl$_2$ |
| [Bz$_2$Si(IndCp)]ZrMe$_2$ | [En(IndH$_4$)$_2$]HfCl$_2$ |
| [Bz$_2$Si(IndCp)]HfMe$_2$ | [En(IndH$_4$)$_2$]TiCl$_2$ |
| [Bz$_2$Si(IndCp)]TiMe$_2$ | [En(IndH$_4$)$_2$]ZrMe$_2$ |
| [Bz$_2$Si(IndCp)]ZrClMe | [Me$_2$Si(Flu)$_2$]TiMe$_2$ |
| [Bz$_2$Si(IndCp)]HfClMe | [Me$_2$Si(Flu)$_2$]ZrClMe |
| [Bz$_2$Si(IndCp)]TiClMe | [Me$_2$Si(Flu)$_2$]HfClMe |
| [Bimethyl Naphtyl(IndCp)]ZrCl$_2$ | [Me$_2$Si(Flu)$_2$]TiClMe |
| [Bimethyl Naphtyl(IndCp)]HfCl$_2$ | [Bz$_2$Si(Flu)$_2$]ZrCl$_2$ |
| [Bimethyl Naphtyl(IndCp)]TiCl$_2$ | [Bz$_2$Si(Flu)$_2$]HfCl$_2$ |
| [En(IndH$_4$)$_2$]HfMe$_2$ | [Bz$_2$Si(Flu)$_2$]TiCl$_2$ |
| [En(IndH$_4$)$_2$]TiMe$_2$ | [Bz$_2$Si(Flu)$_2$]ZrMe$_2$ |
| [En(IndH$_4$)$_2$]ZrClMe | [Bz$_2$Si(Flu)$_2$]HfMe$_2$ |
| [En(IndH$_4$)$_2$]HfClMe | [Bz$_2$Si(Flu)$_2$]TiMe$_2$ |
| [En(IndH$_4$)$_2$]TiClMe | [Bz$_2$Si(Flu)$_2$]ZrClMe |
| [Bz$_2$Si(IndH$_4$)$_2$]ZrCl$_2$ | [Bz$_2$Si(Flu)$_2$]HfClMe |
| [Bz$_2$Si(IndH$_4$)$_2$]HfCl$_2$ | [Bz$_2$Si(Flu)$_2$]TiClMe |
| [Bz$_2$Si(IndH$_4$)$_2$]TiCl$_2$ | [Bimethyl Naphtyl(Flu)$_2$]ZrCl$_2$ |
| [Bz$_2$Si(IndH$_4$)$_2$]ZrMe$_2$ | [Bimethyl Naphtyl(Flu)$_2$]HfCl$_2$ |
| [Bz$_2$Si(IndH$_4$)$_2$]HfMe$_2$ | [Bimethyl Naphtyl(Flu)$_2$]TiCl$_2$ |
| [Bz$_2$Si(IndH$_4$)$_2$]TiMe$_2$ | [Bimethyl Naphtyl(Flu)$_2$]ZrMe$_2$ |
| [Bz$_2$Si(IndH$_4$)$_2$]ZrClMe | [Bimethyl Naphtyl(Flu)$_2$]HfMe$_2$ |
| [Bz$_2$Si(IndH$_4$)$_2$]HfClMe | [Bimethyl Naphtyl(Flu)$_2$]TiMe$_2$ |
| [Bz$_2$Si(IndH$_4$)$_2$]TiClMe | [Bimethyl Naphtyl(Flu)$_2$]ZrClMe |
| [Me$_2$Si(IndH$_4$)$_2$]ZrCl$_2$ | [Bimethyl Naphtyl(Flu)$_2$]HfClMe |
| [Me$_2$Si(IndH$_4$)$_2$]HfCl$_2$ | [Bimethyl Naphtyl(Flu)$_2$]TiClMe |
| [Me$_2$Si(IndH$_4$)$_2$]TiCl$_2$ | [En(2,4,7 Me$_3$Ind)$_2$ZrCl$_2$ |
| [Me$_2$Si(IndH$_4$)$_2$]ZrMe$_2$ | [En(IndH$_4$)$_2$]ZrCl$_2$ |
| [Me$_2$Si(IndH$_4$)$_2$]HfMe$_2$ | [Me$_2$Si (2,4,7 Me$_3$Ind)$_2$ZrCl$_2$ |
| [Me$_2$Si(IndH$_4$)$_2$]TiMe$_2$ | [Me$_2$Si (IndH$_4$)$_2$]ZrCl$_2$ |

Table 1. (continued)

| List of Metallocenes | |
|---|---|
| [Me$_2$Si(IndH$_4$)$_2$]ZrClMe | [Me$_2$Si(Ind)2]ZrCl$_2$ |
| [Me$_2$Si(IndH$_4$)$_2$]HfClMe | [Ph$_2$Si(Ind)$_2$]ZrCl$_2$ |
| [Me$_2$Si(IndH$_4$)$_2$]TiClMe | [Bz$_2$Si(Ind)$_2$]ZrCl$_2$ |
| [Bimethyl Naphtyl(IndH$_4$)$_2$]ZrCl$_2$ | [Me$_2$Si(2,4,7 Me-3-Ind)$_2$ZrCl$_2$ |
| [Bimethyl Naphtyl(IndH$_4$)$_2$]HfCl$_2$ | [Me$_2$Si(IndH$_4$)$_2$]ZrCl$_2$ |
| [Bimethyl Naphtyl(IndH$_4$)$_2$]TiCl$_2$ | [Me$_2$Si(2-Me-4,6-i-PrInd)$_2$]ZrCl$_2$ |
| [Bimethyl Naphtyl(IndH$_4$)$_2$]ZrMe$_2$ | [Me$_2$Si(2Me 4PhInd)$_2$]ZrCl$_2$ |
| [Bimethyl Naphtyl(IndH$_4$)$_2$]HfMe$_2$ | [Me$_2$Si(2Me4,4BenzoInd)$_2$]ZrCl$_2$ |
| [Bimethyl Naphtyl(IndH$_4$)$_2$]TiMe$_2$ | [Me$_2$Si(2,4,7 Me-3-Ind)$_2$ZrCl$_2$ |
| [Bimethyl Naphtyl(IndH$_4$)$_2$]ZrClMe | [Bz$_2$Si(IndH$_4$)$_2$]ZrCl$_2$ |
| [Bimethyl Naphtyl(IndH$_4$)$_2$]HfClMe | [Bz$_2$Si(2-Me-4,6-i-PrInd)$_2$]ZrCl$_2$ |
| [Bimethyl Naphtyl(IndH$_4$)$_2$]TiClMe | [Bz$_2$Si(2Me 4PhInd)$_2$]ZrCl$_2$ |
| [En(Flu)$_2$]ZrCl$_2$ | [Bz$_2$Si(2Me4,4BenzoInd)$_2$]ZrCl$_2$ |
| [En(Flu)$_2$]HfCl$_2$ | [Ph$_2$C(Ind)(Cp)]ZrCl$_2$ |
| [En(Flu)$_2$]TiCl$_2$ | [Me$_2$C(Ind)(Cp)]ZrCl$_2$ |
| [En(Flu)$_2$]ZrMe$_2$ | [Me$_2$C(Ind)(3-MeCp)]ZrCl$_2$ |
| [En(Flu)$_2$]HfMe$_2$ | [Ph$_2$C(Flu)(Cp)]ZrCl$_2$ |
| [En(Flu)$_2$]TiMe$_2$ | [Me$_2$C(Flu)(Cp)]ZrCl$_2$ |
| [En(Flu)$_2$]ZrClMe | [Me$_2$C(Flu)(Cp)]HfCl$_2$ |
| [En(Flu)$_2$]HfClMe | Et(Ind)$_2$ZrCl$_2$ |
| [En(Flu)$_2$]TiClMe | Me$_2$Si(Ind)$_2$ZrCl$_2$ |
| [Me$_2$Si(Flu)$_2$]ZrCl$_2$ | [Me$_2$Si(2-Me-4,6-i-PrInd)$_2$]TiCl$_2$ |
| [Me$_2$Si(Flu)$_2$]HfCl$_2$ | [Me$_2$Si(2Me 4PhInd)$_2$]TiCl$_2$ |
| [Me$_2$Si(Flu)$_2$]TiCl$_2$ | [Me$_2$Si(2Me4,4BenzoInd)$_2$]TiCl$_2$ |
| [Me$_2$Si(Flu)$_2$]ZrMe$_2$ | [Me$_2$Si(2,4,7 Me-3-Ind)$_2$TiCl$_2$ |
| [Me$_2$Si(Flu)$_2$]HfMe$_2$ | [Bz$_2$Si(IndH$_4$)$_2$]TiCl$_2$ |
| Me$_2$Si(IndH$_4$)$_2$ZrCl$_2$ | [Bz$_2$Si(2-Me-4,6-i-PrInd)$_2$]TiCl$_2$ |
| Me$_2$Si(2-MeInd)$_2$ZrCl$_2$ | [Bz$_2$Si(2Me 4PhInd)$_2$]TiCl$_2$ |
| Me$_2$Si(2-Me-4-iPrInd)$_2$ZrCl$_2$ | [Bz$_2$Si(2Me4,4BenzoInd)$_2$]TiCl$_2$ |
| Me$_2$Si (2,4-Me$_2$ Cp) $_2$ZrCl$_2$ | [Ph$_2$C(Ind)(Cp)]TiCl$_2$ |
| Me$_2$Si(2-Me-4-tBuCp)$_2$ZrCl$_2$ | [Me$_2$C(Ind)(Cp)]TiCl$_2$ |
| Me$_2$Si(2-Me-4,5 BenzInd)$_2$ZrCl$_2$ | [Me$_2$C(Ind)(3-MeCp)]TiCl$_2$ |
| Me$_2$Si(2-Me-4-PhInd)$_2$ZrCl$_2$ | [Ph$_2$C(Flu)(Cp)]TiCl$_2$ |
| Me$_2$Ge(2-Me-4-PhInd)$_2$ZrCl$_2$ | [Me$_2$C(Flu)(Cp)]TiCl$_2$ |
| Me$_2$Si(2-Me-4-naphthInd)$_2$ZrCl$_2$ | [Me$_2$C(Flu)(Cp)]HfCl$_2$ |
| Bz$_2$Si(Ind)$_2$ZrCl$_2$ | Et(Ind)$_2$TiCl$_2$ |
| Bz$_2$Si(IndH$_4$)$_2$ZrCl$_2$ | Me$_2$Si(Ind)$_2$TiCl$_2$ |
| Bz$_2$Si(2-MeInd)$_2$ZrCl$_2$ | Me$_2$Si(IndH$_4$)$_2$TiCl$_2$ |
| Bz$_2$Si(2-Me-4-iPrInd)$_2$ZrCl$_2$ | Me$_2$Si(2-MeInd)$_2$TiCl$_2$ |
| Bz$_2$Si (2,4-Me$_2$ Cp) $_2$ZrCl$_2$ | Me$_2$Si(2-Me-4-iPrInd)$_2$TiCl$_2$ |
| Bz$_2$Si(2-Me-4-tBuCp)$_2$ZrCl$_2$ | Me$_2$Si (2,4-Me$_2$ Cp) $_2$TiCl$_2$ |
| Bz$_2$Si(2-Me-4,5 BenzInd)$_2$ZrCl$_2$ | Me$_2$Si(2-Me-4-tBuCp)$_2$TiCl$_2$ |
| Bz$_2$Si(2-Me-4-PhInd)$_2$ZrCl$_2$ | Me$_2$Si(2-Me-4,5 BenzInd)$_2$TiCl$_2$ |
| Bz$_2$Ge(2-Me-4-PhInd)$_2$ZrCl$_2$ | Me$_2$Si(2-Me-4-PhInd)$_2$TiCl$_2$ |
| Bz$_2$Si(2-Me-4-naphthInd)$_2$ZrCl$_2$ | Me$_2$Ge(2-Me-4-PhInd)$_2$TiCl$_2$ |
| Et(IndH$_4$)$_2$ZrCl$_2$ | Me$_2$Si(2-Me-4-naphthInd)$_2$TiCl$_2$ |
| Et(2-MeInd)$_2$ZrCl$_2$ | Bz$_2$Si(Ind)$_2$TiCl$_2$ |
| Et(2-Me-4-iPrInd)$_2$ZrCl$_2$ | Bz$_2$Si(IndH$_4$)$_2$TiCl$_2$ |
| Et(2,4-Me$_2$ Cp) $_2$ZrCl$_2$ | Bz$_2$Si(2-MeInd)$_2$TiCl$_2$ |
| Et(2-Me-4-tBuCp)$_2$ZrCl$_2$ | Bz$_2$Si(2-Me-4-iPrInd)$_2$TiCl$_2$ |

Table 1.   (continued)

| List of Metallocenes | |
|---|---|
| Et(2-Me-4,5 BenzInd)$_2$ZrCl$_2$ | Bz$_2$Si (2,4-Me$_2$ Cp) $_2$TiCl$_2$ |
| Et(2-Me-4-PhInd)$_2$ZrCl$_2$ | Bz$_2$Si(2-Me-4-tBuCp)$_2$TiCl$_2$ |
| Et(2-Me-4-PhInd)$_2$ZrCl$_2$ | Bz$_2$Si(2-Me-4,5 BenzInd)$_2$TiCl$_2$ |
| Et(2-Me-4-naphthInd)$_2$ZrCl$_2$ | Bz$_2$Si(2-Me-4-PhInd)$_2$TiCl$_2$ |
| Et(Ind)$_2$ZrCl$_2$ | Bz$_2$Ge(2-Me-4-PhInd)$_2$TiCl$_2$ |
| Et(IndH$_4$)$_2$ZrCl$_2$ | Bz$_2$Si(2-Me-4-naphthInd)$_2$TiCl$_2$ |
| Et (2-MeInd)$_2$ZrCl$_2$ | Et(IndH$_4$)$_2$TiCl$_2$ |
| Et(2-Me-4-iPrInd)$_2$ZrCl$_2$ | Et(2-MeInd)$_2$TiCl$_2$ |
| Et(2,4-Me$_2$ Cp) $_2$ZrCl$_2$ | Et(2-Me-4-iPrInd)$_2$TiCl$_2$ |
| Et(2-Me-4-tBuCp)$_2$ZrCl$_2$ | Et(2,4-Me$_2$ Cp) $_2$TiCl$_2$ |
| Et(2-Me-4,5 BenzInd)$_2$ZrCl$_2$ | Et(2-Me-4-tBuCp)$_2$TiCl$_2$ |
| Et(2-Me-4-PhInd)$_2$ZrCl$_2$ | Et(2-Me-4,5 BenzInd)$_2$TiCl$_2$ |
| Et(2-Me-4-PhInd)$_2$ZrCl$_2$ | Et(2-Me-4-PhInd)$_2$TiCl$_2$ |
| Et(2-Me-4-naphthInd)$_2$ZrCl$_2$ | Et(2-Me-4-PhInd)$_2$TiCl$_2$ |
| [En(2,4,7 Me$_3$Ind)$_2$TiCl$_2$ | Et(2-Me-4-naphthInd)$_2$TiCl$_2$ |
| [En(IndH$_4$)$_2$]TiCl$_2$ | Et(Ind)$_2$TiCl$_2$ |
| [Me$_2$Si (2,4,7 Me$_3$Ind)$_2$TiCl$_2$ | Et(IndH$_4$)$_2$TiCl$_2$ |
| [Me$_2$Si (IndH$_4$)$_2$]TiCl$_2$ | Bz$_2$Si(2-Me-4-tBuCp)$_2$HfCl$_2$ |
| [Me$_2$Si(Ind)2]TiCl$_2$ | Bz2Si(2-Me-4,5 BenzInd)$_2$HfCl$_2$ |
| [Ph$_2$Si(Ind)$_2$]TiCl$_2$ | Bz$_2$Si(2-Me-4-PhInd)$_2$HfCl$_2$ |
| [Bz$_2$Si(Ind)$_2$]TiCl$_2$ | Bz$_2$Ge(2-Me-4-PhInd)$_2$HfCl$_2$ |
| [Me$_2$Si(2,4,7 Me-3-Ind)$_2$TiCl$_2$ | Bz$_2$Si(2-Me-4-naphthInd)$_2$HfCl$_2$ |
| [Me$_2$Si(IndH$_4$)$_2$]TiCl$_2$ | Et(IndH$_4$)$_2$HfCl$_2$ |
| Et (2-MeInd)$_2$TiCl$_2$ | Et(2-MeInd)$_2$HfCl$_2$ |
| Et(2-Me-4-iPrInd)$_2$TiCl$_2$ | Et(2-Me-4-iPrInd)$_2$HfCl$_2$ |
| Et(2,4-Me$_2$ Cp) $_2$TiCl$_2$ | Et(2,4-Me$_2$ Cp) $_2$HfCl$_2$ |
| Et(2-Me-4-tBuCp)$_2$TiCl$_2$ | Et(2-Me-4-tBuCp)$_2$HfCl$_2$ |
| Et(2-Me-4,5 BenzInd)$_2$TiCl$_2$ | Et(2-Me-4,5 BenzInd)$_2$HfCl$_2$ |
| Et(2-Me-4-PhInd)$_2$TiCl$_2$ | Et(2-Me-4-PhInd)$_2$HfCl$_2$ |
| Et(2-Me-4-PhInd)$_2$TiCl$_2$ | Et(2-Me-4-PhInd)$_2$HfCl$_2$ |
| Et(2-Me-4-naphthInd)$_2$TiCl$_2$ | Et(2-Me-4-naphthInd)$_2$HfCl$_2$ |
| [En(2,4,7 Me$_3$Ind)$_2$HfCl$_2$ | Et(Ind)$_2$HfCl$_2$ |
| [En(IndH$_4$)$_2$]HfCl$_2$ | Et(IndH$_4$)$_2$HfCl$_2$ |
| [Me$_2$Si (2,4,7 Me$_3$Ind)$_2$HfCl$_2$ | Et (2-MeInd)$_2$HfCl$_2$ |
| [Me$_2$Si (IndH$_4$)$_2$]HfCl$_2$ | Et(2-Me-4-iPrInd)$_2$HfCl$_2$ |
| [Me$_2$Si(Ind)2]HfCl$_2$ | Et(2,4-Me$_2$ Cp) $_2$HfCl$_2$ |
| [Ph$_2$Si(Ind)$_2$]HfCl$_2$ | Et(2-Me-4-tBuCp)$_2$HfCl$_2$ |
| [Bz$_2$Si(Ind)$_2$]HfCl$_2$ | Et(2-Me-4,5 BenzInd)$_2$HfCl$_2$ |
| [Me$_2$Si(2,4,7 Me-3-Ind)$_2$HfCl$_2$ | Et(2-Me-4-PhInd)$_2$HfCl$_2$ |
| [Me$_2$Si(IndH$_4$)$_2$]HfCl$_2$ | Et(2-Me-4-PhInd)$_2$HfCl$_2$ |
| [Me$_2$Si(2-Me-4,6-i-PrInd)$_2$]HfCl$_2$ | Et(2-Me-4-naphthInd)$_2$HfCl$_2$ |
| [Me$_2$Si(2Me 4PhInd)$_2$]HfCl$_2$ | [En(2,4,7 Me$_3$Ind)$_2$ZrMe$_2$ |
| [Me$_2$Si(2Me4,4Benzolnd)$_2$]HfCl$_2$ | [En(IndH$_4$)$_2$]ZrMe$_2$ |
| [Me$_2$Si(2,4,7 Me-3-Ind)$_2$]HfCl$_2$ | [Me$_2$Si (2,4,7 Me$_3$Ind)$_2$ZrMe$_2$ |
| [Bz$_2$Si(IndH$_4$)$_2$]HfCl$_2$ | [Me$_2$Si (IndH$_4$)$_2$ZrMe$_2$ |
| [Bz $_2$Si(2-Me-4,6-i-PrInd)$_2$]HfCl$_2$ | [Me$_2$Si(Ind)2]ZrMe$_2$ |
| [Bz$_2$Si(2Me 4PhInd)$_2$]HfCl$_2$ | [Ph$_2$Si(Ind)$_2$]ZrMe$_2$ |
| [Bz $_2$Si(2Me4,4Benzolnd)$_2$]HfCl$_2$ | [Bz $_2$Si(Ind)$_2$]ZrMe$_2$ |
| [Ph$_2$C(Ind)(Cp)]HfCl$_2$ | [Me$_2$Si(2,4,7 Me-3-Ind)$_2$ZrMe$_2$ |
| [Me$_2$C(Ind)(Cp)]HfCl$_2$ | [Me$_2$Si(IndH$_4$)$_2$]ZrMe$_2$ |

Table 1.   (continued)

| List of Metallocenes | |
|---|---|
| [Me$_2$C(Ind)(3-MeCp))HfCl$_2$ | [Me$_2$Si(2-Me-4,6-i-PrInd)$_2$]ZrMe$_2$ |
| [Ph$_2$C(Flu)(Cp)]HfCl$_2$ | [Me$_2$Si(2Me 4PhInd)$_2$]ZrMe$_2$ |
| [Me$_2$C(Flu)(Cp)]HfCl$_2$ | [Me$_2$Si(2Me4,4BenzoInd)$_2$]ZrMe$_2$ |
| [Me$_2$C(Flu)(Cp)]HfCl$_2$ | [Me$_2$Si(2,4,7 Me-3-Ind)$_2$ZrMe$_2$ |
| Et(Ind)$_2$HfCl$_2$ | [Bz$_2$Si(IndH$_4$)$_2$]ZrMe$_2$ |
| Me$_2$Si(Ind)$_2$HfCl$_2$ | [Bz$_2$Si(2-Me-4,6-i-PrInd)$_2$]ZrMe$_2$ |
| Me$_2$Si(IndH$_4$)$_2$HfCl$_2$ | [Bz$_2$Si(2Me 4PhInd)$_2$]ZrMe$_2$ |
| Me$_2$Si(2-MeInd)$_2$HfCl$_2$ | [Bz$_2$Si(2Me4,4BenzoInd)$_2$]ZrMe$_2$ |
| Me$_2$Si(2-Me-4-iPrInd)$_2$HfCl$_2$ | [Ph$_2$C(Ind)(Cp)]ZrMe$_2$ |
| Me$_2$Si (2,4-Me$_2$ Cp) $_2$HfCl$_2$ | [Me$_2$C(Ind)(Cp)]ZrMe$_2$ |
| Me$_2$Si(2-Me-4-tBuCp)$_2$HfCl$_2$ | [Me$_2$C(Ind)(3-MeCp)]ZrMe$_2$ |
| Me$_2$Si(2-Me-4,5 BenzInd)$_2$HfCl$_2$ | [Ph$_2$C(Flu)(Cp)]ZrMe$_2$ |
| Me$_2$Si(2-Me-4-PhInd)$_2$HfCl$_2$ | [Me$_2$C(Flu)(Cp)]ZrMe$_2$ |
| Me$_2$Ge(2-Me-4-PhInd)$_2$HfCl$_2$ | [Me$_2$C(Flu)(Cp)]HfMe$_2$ |
| Me$_2$Si(2-Me-4-naphthInd)$_2$HfCl$_2$ | [Me$_2$Si(2,4,7 Me-3-Ind)$_2$TiMe$_2$ |
| Bz$_2$Si(Ind)$_2$HfCl$_2$ | [Me$_2$Si(IndH$_4$)$_2$]TiMe$_2$ |
| Bz$_2$Si(IndH$_4$)$_2$HfCl$_2$ | [Me$_2$Si(2-Me-4,6-i-PrInd)$_2$]TiMe$_2$ |
| Bz$_2$Si(2-MeInd)$_2$HfCl$_2$ | [Me$_2$Si(2Me 4PhInd)$_2$]TiMe$_2$ |
| Bz$_2$Si(2-Me-4-iPrInd)$_2$HfCl$_2$ | [Me$_2$Si(2Me4,4BenzoInd)$_2$]TiMe$_2$ |
| Bz$_2$Si (2,4-Me$_2$ Cp) $_2$HfCl$_2$ | [Me$_2$Si(2,4,7 Me-3-Ind)$_2$TiMe$_2$ |
| Et(Ind)$_2$ZrMe$_2$ | [Bz$_2$Si(IndH$_4$)$_2$]TiMe$_2$ |
| Me$_2$Si(Ind)$_2$ZrMe$_2$ | [Bz$_2$Si(2-Me-4,6-i-PrInd)$_2$]TiMe$_2$ |
| Me$_2$Si(IndH$_4$)$_2$ZrMe$_2$ | [Bz$_2$Si(2Me 4PhInd)$_2$]TiMe$_2$ |
| Me$_2$Si(2-MeInd)$_2$ZrMe$_2$ | [Bz$_2$Si(2Me4,4BenzoInd)$_2$]TiMe$_2$ |
| Me$_2$Si(2-Me-4-iPrInd)$_2$ZrMe$_2$ | [Ph$_2$C(Ind)(Cp)]TiMe$_2$ |
| Me$_2$Si (2,4-Me$_2$ Cp)$_2$ZrMe$_2$ | [Me$_2$C(Ind)(Cp)]TiMe$_2$ |
| Me$_2$Si(2-Me-4-tBuCp)$_2$ZrMe$_2$ | [Me$_2$C(Ind)(3-MeCp)]TiMe$_2$ |
| Me$_2$Si(2-Me-4,5 BenzInd)$_2$ZrMe$_2$ | [Ph$_2$C(Flu)(Cp)]TiMe$_2$ |
| Me$_2$Si(2-Me-4-PhInd)$_2$ZrMe$_2$ | [Me$_2$C(Flu)(Cp)]TiMe$_2$ |
| Me$_2$Ge(2-Me-4-PhInd)$_2$ZrMe$_2$ | [Me$_2$C(Flu)(Cp)]HfMe$_2$ |
| Me$_2$Si(2-Me-4-naphthInd)$_2$ZrMe$_2$ | Et(Ind)$_2$TiMe$_2$ |
| Bz$_2$Si(Ind)$_2$ZrMe$_2$ | Me$_2$Si(Ind)$_2$TiMe$_2$ |
| Bz$_2$Si(IndH$_4$)$_2$ZrMe$_2$ | Me$_2$Si(IndH$_4$)$_2$TiMe$_2$ |
| Bz$_2$Si(2-MeInd)$_2$ZrMe$_2$ | Me$_2$Si(2-MeInd)$_2$TiMe$_2$ |
| Bz$_2$Si(2-Me-4-iPrInd)$_2$ZrMe$_2$ | Me$_2$Si(2-Me-4-iPrInd)$_2$TiMe$_2$ |
| Bz$_2$Si (2,4-Me$_2$ Cp) $_2$ZrMe$_2$ | Me$_2$Si (2,4-Me$_2$ Cp) $_2$TiMe$_2$ |
| Bz$_2$Si(2-Me-4-tBuCp)$_2$ZrMe$_2$ | Me$_2$Si(2-Me-4-tBuCp)$_2$TiMe$_2$ |
| Bz$_2$Si(2-Me-4,5 BenzInd)$_2$ZrMe$_2$ | Me$_2$Si(2-Me-4,5 BenzInd)$_2$TiMe$_2$ |
| Bz$_2$Si(2-Me-4-PhInd)$_2$ZrMe$_2$ | Me$_2$Si(2-Me-4-PhInd)$_2$TiMe$_2$ |
| Bz$_2$Ge(2-Me-4-PhInd)$_2$ZrMe$_2$ | Me$_2$Ge(2-Me-4-PhInd)$_2$TiMe$_2$ |
| Bz$_2$Si(2-Me-4-naphthInd)$_2$ZrMe$_2$ | Me$_2$Si(2-Me-4-naphthInd)$_2$TiMe$_2$ |
| Et(IndH$_4$)$_2$ZrMe$_2$ | Bz$_2$Si(Ind)$_2$TiMe$_2$ |
| Et(2-MeInd)$_2$ZrMe$_2$ | Bz$_2$Si(IndH$_4$)$_2$TiMe$_2$ |
| Et(2-Me-4-iPrInd)$_2$ZrMe$_2$ | Bz$_2$Si(2-MeInd)$_2$TiMe$_2$ |
| Et(2,4-Me$_2$ Cp) $_2$ZrMe$_2$ | Bz$_2$Si(2-Me-4-iPrInd)$_2$TiMe$_2$ |
| Et(2-Me-4-tBuCp)$_2$ZrMe$_2$ | Bz$_2$Si (2,4-Me$_2$ Cp) $_2$TiMe$_2$ |
| Et(2-Me-4,5 BenzInd)$_2$ZrMe$_2$ | Bz$_2$Si(2-Me-4-tBuCp)$_2$TiMe$_2$ |
| Et(2-Me-4-PhInd)$_2$ZrMe$_2$ | Bz$_2$Si(2-Me-4,5 BenzInd)$_2$TiMe$_2$ |
| Et(2-Me-4-PhInd)$_2$ZrMe$_2$ | Bz$_2$Si(2-Me-4-PhInd)$_2$TiMe$_2$ |
| Et(2-Me-4-naphthInd)$_2$ZrMe$_2$ | Bz$_2$Ge(2-Me-4-PhInd)$_2$TiMe$_2$ |

Table 1. (continued)

| List of Metallocenes | |
|---|---|
| Et(Ind)$_2$ZrMe$_2$ | Bz$_2$Si(2-Me-4-naphthInd)$_2$TiMe$_2$ |
| Et(IndH$_4$)$_2$ZrMe$_2$ | Et(IndH$_4$)$_2$TiMe$_2$ |
| Et (2-MeInd)$_2$ZrMe$_2$ | Et(2-MeInd)$_2$TiMe$_2$ |
| Et(2-Me-4-iPrInd)$_2$ZrMe$_2$ | Et(2-Me-4-iPrInd)$_2$TiMe$_2$ |
| Et(2,4-Me$_2$ Cp) $_2$ZrMe$_2$ | Et(2,4-Me$_2$ Cp) $_2$TiMe$_2$ |
| Et(2-Me-4-tBuCp)$_2$ZrMe$_2$ | Et(2-Me-4-tBuCp)$_2$TiMe$_2$ |
| Et(2-Me-4,5 BenzInd)$_2$ZrMe$_2$ | Et(2-Me-4,5 BenzInd)$_2$TiMe$_2$ |
| Et(2-Me-4-PhInd)$_2$ZrMe$_2$ | Et(2-Me-4-PhInd)$_2$TiMe$_2$ |
| Et(2-Me-4-PhInd)$_2$ZrMe$_2$ | Et(2-Me-4-PhInd)$_2$TiMe$_2$ |
| Et(2-Me-4-naphthInd)$_2$ZrMe$_2$ | Et(2-Me-4-naphthInd)$_2$TiMe$_2$ |
| [En(2,4,7 Me$_3$Ind)$_2$TiMe$_2$ | Bz$_2$Si(2-Me-4-iPrInd)$_2$HfMe$_2$ |
| [En(IndH$_4$)$_2$]TiMe$_2$ | Bz$_2$Si (2,4-Me$_2$ Cp) $_2$HfMe$_2$ |
| [Me$_2$Si (2,4,7 Me$_3$Ind)$_2$TiMe$_2$ | Bz$_2$Si(2-Me-4-tBuCp)$_2$HfMe$_2$ |
| [Me$_2$Si (IndH$_4$)$_2$]TiMe$_2$ | Bz$_2$Si(2-Me-4,5 BenzInd)$_2$HfMe$_2$ |
| [Me$_2$Si(Ind)$_2$]TiMe$_2$ | Bz$_2$Si(2-Me-4-PhInd)$_2$HfMe$_2$ |
| [Ph$_2$Si(Ind)$_2$]TiMe$_2$ | Bz$_2$Ge(2-Me-4-PhInd)$_2$HfMe$_2$ |
| [Bz$_2$Si(Ind)$_2$]TiMe$_2$ | Bz$_2$Si(2-Me-4-naphthInd)$_2$HfMe$_2$ |
| Et(Ind)$_2$TiMe$_2$ | Et(IndH$_4$)$_2$HfMe$_2$ |
| Et(IndH$_4$)$_2$TiMe$_2$ | Et(2-MeInd)$_2$HfMe$_2$ |
| Et (2-MeInd)$_2$TiMe$_2$ | Et(2-Me-4-iPrInd)$_2$HfMe$_2$ |
| Et(2-Me-4-iPrInd)$_2$TiMe$_2$ | Et(2,4-Me$_2$ Cp) $_2$HfMe$_2$ |
| Et(2,4-Me$_2$ Cp) $_2$TiMe$_2$ | Et(2-Me-4-tBuCp)$_2$HfMe$_2$ |
| Et(2-Me-4-tBuCp)$_2$TiMe$_2$ | Et(2-Me-4,5 BenzInd)$_2$HfMe$_2$ |
| Et(2-Me-4,5 BenzInd)$_2$TiMe$_2$ | Et(2-Me-4-PhInd)$_2$HfMe$_2$ |
| Et(2-Me-4-PhInd)$_2$TiMe$_2$ | Et(2-Me-4-PhInd)$_2$HfMe$_2$ |
| Et(2-Me-4-PhInd)$_2$TiMe$_2$ | Et(2-Me-4-naphthInd)$_2$HfMe$_2$ |
| Et(2-Me-4-naphthInd)$_2$TiMe$_2$ | Et(Ind)$_2$HfMe$_2$ |
| [En(2,4,7 Me$_3$Ind)$_2$HfMe$_2$ | Et(IndH$_4$)$_2$HfMe$_2$ |
| [En(IndH$_4$)$_2$]HfMe$_2$ | Et(2-MeInd)$_2$HfMe$_2$ |
| [Me$_2$Si(2,4,7 Me$_3$Ind)$_2$HfMe$_2$ | Et(2-Me-4-iPrInd)$_2$HfMe$_2$ |
| [Me$_2$Si (IndH$_4$)$_2$]HfMe$_2$ | Et(2,4-Me$_2$ Cp) $_2$HfMe$_2$ |
| [Me$_2$Si(Ind)2]HfMe$_2$ | Et(2-Me-4-tBuCp)$_2$HfMe$_2$ |
| [Ph$_2$Si(Ind)$_2$]HfMe$_2$ | Et(2-Me-4,5 BenzInd)$_2$HfMe$_2$ |
| [Bz$_2$Si(Ind)$_2$]HfMe$_2$ | Et(2-Me-4-PhInd)$_2$HfMe$_2$ |
| [Me$_2$Si(2,4,7 Me-3-Ind)$_2$HfMe$_2$ | Et(2-Me-4-PhInd)$_2$HfMe$_2$ |
| [Me$_2$Si(IndH$_4$)$_2$]HfMe$_2$ | Et(2-Me-4-naphthInd)$_2$HfMe$_2$ |
| [Me$_2$Si(2-Me-4,6-i-PrInd)$_2$]HfMe$_2$ | [En(2,4,7 Me$_3$Ind)$_2$ZrClMe |
| [Me$_2$Si(2Me 4PhInd)$_2$]HfMe$_2$ | [En(IndH$_4$)$_2$]ZrClMe |
| [Me$_2$Si(2Me4,4BenzoInd)$_2$]HfMe$_2$ | [Me$_2$Si(2,4,7 Me$_3$Ind)$_2$ZrClMe |
| [Me$_2$Si(2,4,7 Me-3-Ind)$_2$HfMe$_2$ | [Me$_2$Si (IndH$_4$)$_2$]ZrClMe |
| [Bz$_2$Si(IndH$_4$)$_2$]HfMe$_2$ | [Me$_2$Si(Ind)$_2$]ZrClMe |
| [Bz $_2$Si(2-Me-4,6-i-PrInd)$_2$]HfMe$_2$ | [Ph$_2$Si(Ind)$_2$]ZrClMe |
| [Bz$_2$Si(2Me 4PhInd)$_2$]HfMe$_2$ | [Bz$_2$Si(Ind)$_2$]ZrClMe |
| [Bz $_2$Si(2Me4,4BenzoInd)$_2$]HfMe$_2$ | [Me$_2$Si(2,4,7 Me-3-Ind)$_2$ZrClMe |
| [Ph$_2$C(Ind)(Cp)]HfMe$_2$ | [Me$_2$Si(IndH$_4$)$_2$]ZrClMe |
| [Me$_2$C(Ind)(Cp)]HfMe$_2$ | [Me$_2$Si(2-Me-4,6-i-PrInd)$_2$]ZrClMe |
| [Me$_2$C(Ind)(3-MeCp)]HfMe$_2$ | [Me$_2$Si(2Me 4PhInd)$_2$]ZrClMe |
| [Ph$_2$C(Flu)(Cp)]HfMe$_2$ | [Me$_2$Si(2Me4,4BenzoInd)$_2$]ZrClMe |
| [Me$_2$C(Flu)(Cp)]HfMe$_2$ | [Me$_2$Si(2,4,7 Me-3-Ind)$_2$ZrClMe |
| [Me$_2$C(Flu)(Cp)]HfMe$_2$ | [Bz$_2$Si(IndH$_4$)$_2$]ZrClMe |

Table 1. (continued)

| List of Metallocenes | |
|---|---|
| Et(Ind)$_2$HfMe$_2$ | [Bz$_2$Si(2-Me-4,6-i-PrInd)$_2$]ZrClMe |
| Me$_2$Si(Ind)$_2$HfMe$_2$ | [Bz$_2$Si(2Me 4PhInd)$_2$]ZrClMe |
| Me$_2$Si(IndH$_4$)$_2$HfMe$_2$ | [Bz$_2$Si(2Me4,4BenzoInd)$_2$]ZrClMe |
| Me$_2$Si(2-MeInd)$_2$HfMe$_2$ | [Ph$_2$C(Ind)(Cp)]ZrClMe |
| Me$_2$Si(2-Me-4-iPrInd)$_2$HfMe$_2$ | [Me$_2$C(Ind)(Cp)]ZrClMe |
| Me$_2$Si (2,4-Me$_2$ Cp) $_2$HfMe$_2$ | [Me$_2$C(Ind)(3-MeCp)]ZrClMe |
| Me$_2$Si(2-Me-4-tBuCp)$_2$HfMe$_2$ | [Ph$_2$C(Flu)(Cp)]ZrClMe |
| Me2Si(2-Me-4,5 BenzInd)2HfMe2 | [Me$_2$Si(Ind)2]TiClMe |
| Me$_2$Si(2-Me-4-PhInd)$_2$HfMe$_2$ | [Ph$_2$Si(Ind)$_2$]TiClMe |
| Me$_2$Ge(2-Me-4-PhInd)$_2$HfMe$_2$ | [Bz$_2$Si(Ind)$_2$]TiClMe |
| Me$_2$Si(2-Me-4-naphthInd)$_2$HfMe$_2$ | [Me$_2$Si(2,4,7 Me-3-Ind)$_2$]TiClMe |
| Bz$_2$Si(Ind)$_2$HfMe$_2$ | [Me$_2$Si(IndH$_4$)$_2$]TiClMe |
| Bz$_2$Si(IndH$_4$)$_2$HfMe$_2$ | [Me$_2$Si(2-Me-4,6-i-PrInd)$_2$]TiClMe |
| Bz$_2$Si(2-MeInd)$_2$HfMe$_2$ | [Me$_2$Si(2Me 4PhInd)$_2$]TiClMe |
| [Me$_2$C(Flu)(Cp)]ZrClMe | [Me$_2$Si(2Me4,4BenzoInd)$_2$]TiClMe |
| [Me$_2$C(Flu)(Cp)]HfClMe | [Me$_2$Si(2,4,7 Me-3-Ind)$_2$]TiClMe |
| Et(Ind)$_2$ZrClMe | [Bz$_2$Si(IndH$_4$)$_2$]TiClMe |
| Me$_2$Si(Ind)$_2$ZrClMe | [Bz$_2$Si(2-Me-4,6-i-PrInd)$_2$]TiClMe |
| Me$_2$Si(IndH$_4$)$_2$ZrClMe | [Bz$_2$Si(2Me 4PhInd)$_2$]TiClMe |
| Me$_2$Si(2-MeInd)$_2$ZrClMe | [Bz$_2$Si(2Me4,4BenzoInd)$_2$]TiClMe |
| Me$_2$Si(2-Me-4-iPrInd)$_2$ZrClMe | [Ph$_2$C(Ind)(Cp)]TiClMe |
| Me$_2$Si (2,4-Me$_2$ Cp) $_2$ZrClMe | [Me$_2$C(Ind)(Cp)]TiClMe |
| Me$_2$Si(2-Me-4-tBuCp)$_2$ZrClMe | [Me$_2$C(Ind)(3-MeCp)]TiClMe |
| Me$_2$Si(2-Me-4,5 BenzInd)$_2$ZrClMe | [Ph$_2$C(Flu)(Cp)]TiClMe |
| Me$_2$Si(2-Me-4-PhInd)$_2$ZrClMe | [Me$_2$C(Flu)(Cp)]TiClMe |
| Me$_2$Ge(2-Me-4-PhInd)$_2$ZrClMe | [Me$_2$C(Flu)(Cp)]HfClMe |
| Me$_2$Si(2-Me-4-naphthInd)$_2$ZrClMe | Et(Ind)$_2$TiClMe |
| Bz$_2$Si(Ind)$_2$ZrClMe | Me$_2$Si(Ind)$_2$TiClMe |
| Bz$_2$Si(IndH$_4$)$_2$ZrClMe | Me$_2$Si(IndH$_4$)$_2$TiClMe |
| Bz$_2$Si(2-MeInd)$_2$ZrClMe | Me$_2$Si(2-MeInd)$_2$TiClMe |
| Bz$_2$Si(2-Me-4-iPrInd)$_2$ZrClMe | Me$_2$Si(2-Me-4-iPrInd)$_2$TiClMe |
| Bz$_2$Si (2,4-Me$_2$ Cp) $_2$ZrClMe | Me$_2$Si (2,4-Me$_2$ Cp) $_2$TiClMe |
| Bz$_2$Si(2-Me-4-tBuCp)$_2$ZrClMe | Me$_2$Si(2-Me-4-tBuCp)$_2$TiClMe |
| Bz$_2$Si(2-Me-4,5 BenzInd)$_2$ZrClMe | Me$_2$Si(2-Me-4,5 BenzInd)$_2$TiClMe |
| Bz$_2$Si(2-Me-4-PhInd)$_2$ZrClMe | Me$_2$Si(2-Me-4-PhInd)$_2$TiClMe |
| Bz$_2$Ge(2-Me-4-PhInd)$_2$ZrClMe | Me$_2$Ge(2-Me-4-PhInd)$_2$TiClMe |
| Bz$_2$Si(2-Me-4-naphthInd)$_2$ZrClMe | Me$_2$Si(2-Me-4-naphthInd)$_2$TiClMe |
| Et(IndH$_4$)$_2$ZrClMe | Bz$_2$Si(Ind)$_2$TiClMe |
| Et(2-MeInd)$_2$ZrClMe | Bz$_2$Si(IndH$_4$)$_2$TiClMe |
| Et(2-Me-4-iPrInd)$_2$ZrClMe | Bz$_2$Si(2-MeInd)$_2$TiClMe |
| Et(2,4-Me$_2$ Cp) $_2$ZrClMe | Bz$_2$Si(2-Me-4-iPrInd)$_2$TiClMe |
| Et(2-Me-4-tBuCp)$_2$ZrClMe | Bz$_2$Si (2,4-Me$_2$ Cp) $_2$TiClMe |
| Et(2-Me-4,5 BenzInd)$_2$ZrClMe | Bz$_2$Si(2-Me-4-tBuCp)$_2$TiClMe |
| Et(2-Me-4-PhInd)$_2$ZrClMe | Bz$_2$Si(2-Me-4,5 BenzInd)$_2$TiClMe |
| Et(2-Me-4-PhInd)$_2$ZrClMe | Bz$_2$Si(2-Me-4-PhInd)$_2$TiClMe |
| Et(2-Me-4-naphthInd)$_2$ZrClMe | Bz$_2$Ge(2-Me-4-PhInd)$_2$TiClMe |
| Et(Ind)$_2$ZrClMe | Bz$_2$Si(2-Me-4-naphthInd)$_2$TiClMe |
| Et(IndH$_4$)$_2$ZrClMe | Et(IndH$_4$)$_2$TiClMe |
| Et (2-MeInd)$_2$ZrClMe | Et(2-MeInd)$_2$TiClMe |
| Et(2-Me-4-iPrInd)$_2$ZrClMe | Et(2-Me-4-iPrInd)$_2$TiClMe |

Table 1.   (continued)

| List of Metallocenes | |
|---|---|
| Et(2,4-Me$_2$ Cp) $_2$ZrClMe | Et(2,4-Me$_2$ Cp) $_2$TiClMe |
| Et(2-Me-4-tBuCp)$_2$ZrClMe | Et(2-Me-4-tBuCp)$_2$TiClMe |
| Et(2-Me-4,5 BenzInd)$_2$ZrClMe | Et(2-Me-4,5 BenzInd)$_2$TiClMe |
| Et(2-Me-4-PhInd)$_2$ZrClMe | Me$_2$Si(2-Me-4-naphthInd)$_2$HfClMe |
| Et(2-Me-4-PhInd)$_2$ZrClMe | Bz$_2$Si(Ind)$_2$HfClMe |
| Et(2-Me-4-naphthInd)$_2$ZrClMe | Bz$_2$Si(IndH$_4$)$_2$HfClMe |
| [En(2,4,7 Me$_3$Ind)$_2$TiClMe | Bz$_2$Si(2-MeInd)$_2$HfClMe |
| [En(IndH$_4$)$_2$]TiClMe | Bz$_2$Si(2-Me-4-iPrInd)$_2$HfClMe |
| [Me$_2$Si (2,4,7 Me$_3$Ind)$_2$TiClMe | Bz$_2$Si (2,4-Me$_2$ Cp)$_2$HfClMe |
| [Me$_2$Si (IndH$_4$)$_2$]TiClMe | Bz$_2$Si(2-Me-4-tBuCp)$_2$HfClMe |
| Et(2-Me-4-PhInd)$_2$TiClMe | Bz$_2$Si(2-Me-4,5 BenzInd)$_2$HfClMe |
| Et(2-Me-4-PhInd)$_2$TiClMe | Bz$_2$Si(2-Me-4-PhInd)$_2$HfClMe |
| Et(2-Me-4-naphthInd)$_2$TiClMe | Bz$_2$Ge(2-Me-4-PhInd)$_2$HfClMe |
| Et(Ind)$_2$TiClMe | Bz$_2$Si(2-Me-4-naphthInd)$_2$HfClMe |
| Et(IndH$_4$)$_2$TiClMe | Et(IndH$_4$)$_2$HfClMe |
| Et (2-MeInd)$_2$TiClMe | Et(2-MeInd)$_2$HfClMe |
| Et(2-Me-4-iPrInd)$_2$TiClMe | Et(2-Me-4-iPrInd)$_2$HfClMe |
| Et(2,4-Me$_2$ Cp)$_2$TiClMe | Et(2,4-Me$_2$ Cp) $_2$HfClMe |
| Et(2-Me-4-tBuCp)$_2$TiClMe | Et(2-Me-4-tBuCp)$_2$HfClMe |
| Et(2-Me-4,5 BenzInd)$_2$TiClMe | Et(2-Me-4,5 BenzInd)$_2$HfClMe |
| Et(2-Me-4-PhInd)$_2$TiClMe | Et(2-Me-4-PhInd)$_2$HfClMe |
| Et(2-Me-4-PhInd)$_2$TiClMe | Et(2-Me-4-PhInd)$_2$HfClMe |
| Et(2-Me-4-naphthInd)$_2$TiClMe | Et(2-Me-4-naphthInd)$_2$HfClMe |
| [En(2,4,7 Me$_3$Ind)$_2$HfClMe | Et(Ind)$_2$HfClMe |
| [En(IndH$_4$)$_2$]HfClMe | Et(IndH$_4$)$_2$HfClMe |
| [Me$_2$Si (2,4,7 Me$_3$Ind)$_2$HfClMe | Et (2-MeInd)$_2$HfClMe |
| [Me$_2$Si (IndH$_4$)$_2$]HfClMe | Et(2-Me-4-iPrInd)$_2$HfClMe |
| [Me$_2$Si(Ind)$_2$]HfClMe | Et(2,4-Me$_2$ Cp) $_2$HfClMe |
| [Ph$_2$Si(Ind)$_2$]HfClMe | Et(2-Me-4-tBuCp)$_2$HfClMe |
| [Bz$_2$Si(Ind)$_2$]HfClMe | Et(2-Me-4,5 BenzInd)$_2$HfClMe |
| [Me$_2$Si(2,4,7 Me-3-Ind)$_2$HfClMe | Et(2-Me-4-PhInd)$_2$HfClMe |
| [Me$_2$Si(IndH$_4$)$_2$]HfClMe | Et(2-Me-4-PhInd)$_2$HfClMe |
| [Me$_2$Si(2-Me-4,6-i-PrInd)$_2$]HfClMe | Et(2-Me-4-naphthInd)$_2$HfClMe |
| [Me$_2$Si(2Me 4PhInd)$_2$]HfClMe | Et(Ind)$_2$HfClMe |
| [Me$_2$Si(2Me4,4BenzoInd)$_2$]HfClMe | Me$_2$Si(Ind)$_2$HfClMe |
| [Me$_2$Si(2,4,7 Me-3-Ind)$_2$HfClMe | Me$_2$Si(IndH$_4$)$_2$HfClMe |
| [Bz$_2$Si(IndH$_4$)$_2$]HfClMe | Me$_2$Si(2-MeInd)$_2$HfClMe |
| [Bz $_2$Si(2-Me-4,6-i-PrInd)$_2$]HfClMe | Me$_2$Si(2-Me-4-iPrInd)$_2$HfClMe |
| [Bz $_2$Si(2Me 4PhInd)$_2$]HfClMe | Me$_2$Si (2,4-Me$_2$ Cp) $_2$HfClMe |
| [Bz $_2$Si(2Me4,4BenzoInd)$_2$]HfClMe | Me$_2$Si(2-Me-4-tBuCp)$_2$HfClMe |
| [Ph$_2$C(Ind)(Cp)]HfClMe | Me$_2$Ge(2-Me-4-PhInd)$_2$HfClMe |
| [Me$_2$C(Ind)(Cp)]HfClMe | Me$_2$Si(2-Me-4,5 BenzInd)$_2$HfClMe |
| [Me$_2$C(Ind)(3-MeCp)]HfClMe | Me$_2$Si(2-Me-4-PhInd)$_2$HfClMe |
| [Ph$_2$C(Flu)(Cp)]HfClMe | |
| [Me$_2$C(Flu)(Cp)]HfClMe | |
| [Me$_2$C(Flu)(Cp)]HfClMe | |

Preferred metallocene catalysts for ethylene polymerization are (CpR)$_2$ZrX$_2$ catalysts, where Cp is cyclopentadienyl, indenyl, fluorenyl, R is H, Me (methyl), Et (ethyl), Pr (propyl), i-Pr, Bu (butyl), i-Bu, and X is Cl.
The metallocene catalyst can be used as part of a catalyst system containing also a co-catalyst which activate the metallocene in the terpolymerization. Examples of such co-catalysts are alumoxanes such as methyl alumoxane (MAO), ethyl alumoxane (EAO), and isobutylalumoxane.

Different known methods of adding the cocatalyst can be used, such as:

mixing the metallocene catalyst with the cocatalyst under inert conditions in an inert solvent and bringing the activated complex catalyst formed into the reaction zone prior or continuously during the terpolymerization; or mixing the cocatalyst with solvent provided for the polymerization and introducing further the catalyst to form the catalyst complex prior to the terpolymerization; or continuously supplying the catalyst and the cocatalyst to the reaction zone during the polymerization with the formation of the activated complex during the terpolymerization; or any other method suitable for ethylene polymerization can be used.

The ethylene metallocene copolymerization process according to this invention may thus involve bringing into contact in the reaction zone at least ethylene, and a further alpha olefin with the proviso that the further alpha olefin has a total number of carbon higher than 5.

The ethylene metallocene terpolymerization process according to this invention may thus involve bringing into contact in the reaction zone at least ethylene, a second alpha olefin and a further alpha olefin with the proviso that at least the second alpha olefin has a total number of carbon higher than 5.

The molecular weight distribution of such terpolymers can vary according to a particular metallocene catalyst employed, a particular co-catalyst employed and a particular mixture of alpha olefins employed.

The invention will now be described in more detail with reference to the following non limiting examples

In the examples:

(i) Melting behavior, ie the Tm melting temperature and the heat of fusion, were determined on a Perkin Elmer DSC7 fitted with a TAC7/PC instrument controller. The samples were heated from 50°C to 200°C at 20°C/min, held at 200°C for 1 min., cooled to 50°C at a rate of 20°C/min, and held at 50°C for 1 minute after which the melting curve was recorded between 50°C and 200°C at a heating rate of 10°C/min.

(ii) Molecular weight was determined on a Waters 150 CV GP chromatograph equipped with a data module and computer acquisition system. Determinations were done on polymer samples dissolved at 150°C in 1,2,4 trichlorobenzene. Each tray of samples included a polystyrene standard and a NBS 1475a standard in order to check the validity of data against the calibration curve data. Differential Refractive Index was used for detection. These tests were used to determine polydispersity and the molecular weight average viscosity weight.

(iii) Rheological analysis were performed on a Physica MCR-500 rheometer with a temperature control unit. Frequency sweep experiments (oscillatory test) were performed with a parallel plate measuring system (25 mm diameter), under controlled strain conditions, at a constant temperature. The measuring conditions were as follows:

The measuring temperatures were T = 150, 160, 170 °C .
The strain = 1 %
The rheological values were determined by varying the angular frequency logarithmically from 0.01 to 500$\ell$/s
The gap between the parallel plates was set to 1 mm.
Measurements were performed on heat stabilised injection molded disks (25 diameter x 2 mm thick) of the polymer.

## EXAMPLE 1

To a 1-liter stainless steel automated autoclave fitted with heating, cooling and stirring facilities, and thoroughly purged with nitrogen, was added 350g polymerization grade cyclohexane and the temperature set at 80°C. To this was added 10 ml of a 30% solution of MAO in toluene prereacted with 0.1 mg bis n-butyl cyclopentadiene zirconium dichloride. Ethylene and a 3/1 mass mixture of Fischer-Tropsch derived 1-pentene and 1-butene were introduced simultaneously at flow rates of 2g/min. After 50 min the monomer flows were stopped, and the reaction continued for another 10 minutes after which the reaction mixture was cooled down. The catalyst was then deactivated by the introduction of 100 ml iso propanol and the slurry filtered, washed repeatedly with acetone and dried under vacuum at 70°C. The yield of terpolymer was 80g. The density of the copolymer as measured according to ASTM D 1505 was 0.9158 g/cm$^3$ and MFI measured according to ASTM D 1238 was 0.1 dg/min. A GPC measurement was carried out and the $M_n$, $M_w$, $M_z$ and polydispersity (P) of the copolymer were 261230, 538870, 936922 and 2.06 respectively. DSC gave a melting temperature of 119 deg. and a fusion enthalpy of 132 J/g. Rheological determinations were done and the dynamic zero shear viscosity and the cross-over frequency $\omega_c$ were respectively 3.71E5 Pa.s and 4 rad/s at 150 °C; were respectively 3.33E5 Pa.s and 5 rad/s at 160 °C; and were respectively 3.18E5 Pa.s and 5.1 rad/s at 170 °C.

EXAMPLE 2

To a 10-liter stainless steel automated autoclave fitted with heating, cooling and stirring facilities, and thoroughly purged with nitrogen, was added 1500g polymerization grade toluene and the temperature set at 85°C. To this was added 10 ml of a 30% solution of MAO in toluene prereacted with 0.58 mg bis 1-ethyl indenyl zirconium dichloride and 100 mg hydrogen. Ethylene and Fischer-Tropsch derived 1-pentene were introduced simultaneously at flow rates of 5g/min. After 80 min. the monomer flows were stopped and the reaction mixture cooled down over a period of 60 minutes. The catalyst was then deactivated by the introduction of 500 ml iso propanol and the slurry filtered, washed repeatedly with acetone and dried under vacuum at 70°C. The yield of copolymer containing 2.8% 1-pentene was 490g. The density of the copolymer as measured according to ASTM D 1505 was 0.9350g/cm$^3$ and MFI measured according to ASTM D 1238 was 1.8 dg/min.

EXAMPLE 3

To a 10-liter stainless steel automated autoclave fitted with heating, cooling and stirring facilities, and thoroughly purged with nitrogen, was added 2000g polymerization grade toluene and the temperature set at 85°C. To this was added 100 ml of a 30% solution of MAO in toluene prereacted with 1.6 mg bis n-butyl cyclopentadiene zirconium dichloride. Ethylene and Fischer-Tropsch derived 1-pentene were introduced simultaneously at flow rates of 12.5 g/min. After 80 min. the monomer flows were stopped and the reaction mixture cooled down over a period of 60 minutes. The catalyst was then deactivated by the introduction of 500 ml iso propanol and the slurry filtered, washed repeatedly with acetone and dried under vacuum at 70°C. The yield of copolymer containing 2% 1-pentene was 940g. The density of the copolymer as measured according to ASTM D 1505 was 0.930 g/cm$^3$ and MFI measured according to ASTM D 1238 was 33 dg/min. A GPC measurement was carried out and the $M_n$, $M_w$, $M_z$ and polydispersity (P) of the copolymer were 40168, 90738, 178436 and 2.26 respectively. DSC gave a melting temperature of 115 deg. and a fusion enthalpy of 94 J/g. Rheological determinations were done and the dynamic zero shear viscosity $\eta°$ was 809 Pa.s at 150 °C, 649 Pa.s at 160 °C and 544 Pa.s at 170 °C.

EXAMPLE 4

To a 10-liter stainless steel automated autoclave fitted with heating, cooling and stirring facilities, and thoroughly purged with nitrogen, was added 2000g polymerization grade toluene and the temperature set at 85°C. To this was added 100 ml of a 30% solution of MAO in toluene prereacted with 0.8 mg bis n-butyl cyclopentadiene zirconium dichloride. Ethylene and Fischer-Tropsch derived 1-pentene were introduced simultaneously at flow rates of 9 g/min and 2.5 g/min respectively. After 80 min. the monomer flows were stopped and the reaction mixture cooled down over a period of 60 minutes. The catalyst was then deactivated by the introduction of 500 ml iso propanol and the slurry filtered, washed repeatedly with acetone and dried under vacuum at 70°C. The yield of copolymer containing 0.44% 1-pentene was 630g. The density of the copolymer as measured according to ASTM D 1505 was 0.955 g/cm$^3$ and MFI measured according to ASTM D 1238 was 0.78 dg/min. A GPC measurement was carried out and the $M_n$, $M_w$, $M_z$ and polydispersity (P) of the copolymer were 82045, 211903, 459699 and 2.58 respectively. DSC gave a melting temperature of 125 deg. and a fusion enthalpy of 143 J/g. Rheological determinations were done and the dynamic zero shear viscosity $\eta°$, the cross-over modulus $G_c$, the cross-over frequency $\omega_c$ were respectively 15019 Pa.s, 168970 Pa and 143 rad/s at 150 °C; were respectively 13152 Pa.s, 198450 Pa and 159 rad/s at 160 °C; and were respectively 11445 Pa.s, 192810 Pa and 185 rad/s at 170 °C.

EXAMPLE 5

To a 1-liter stainless steel automated autoclave fitted with heating, cooling and stirring facilities, and thoroughly purged with nitrogen, was added 350g polymerization grade toluene and the temperature set at 80°C. To this was added 1.5 ml of a 30% solution of MAO in toluene followed 5 minutes later by 2ml of a pre-contacted solution containing 1 ml of a 5$^{-3}$ M solution of a bis-indenyl dimethyl silyl zirconium dichloride and 1 ml of a 30% solution of MAO, both in toluene. Ethylene and Fischer-Tropsch derived 1-hexene were introduced simultaneously at flow rates of 4 g/min. and 2 g/min. respectively. After 100 g of ethylene and 50 g of Fisher-Tropsch derived 1-hexene were introduced the monomer flows were stopped and the reaction continued for another 35 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of copolymer was 122g. The density of the copolymer as measured according to ASTM D 1505 was 0.94 g/cm$^3$ and MFI measured according to ASTM D 1238 was 0.01 dg/min. A GPC measurement was carried out and the $M_n$, $M_w$, $M_z$ and polydispersity (P) of the copolymer were 96750, 227492, 435490 and 2.35 respectively. DSC gave a melting temperature of 123 deg. and a fusion enthalpy of 112 J/g. Rheological determinations were done and the dynamic zero shear viscosity $\eta°$ was 1221300 and 1052800 Pa.s at respectively 150 and 170 °C and the cross-over complex shear viscosity $\eta^*_c$ was 934820, 750350 and 444480 Pa.s at respectively 150, 160 and 170 °C.

EXAMPLE 6

To a 10-liter stainless steel automated autoclave fitted with heating, cooling and stirring facilities, and thoroughly purged with nitrogen, was added 2000g polymerization grade toluene and the temperature set at 85°C. To this was added 100 ml of a 30% solution of MAO in toluene followed 5 minutes later by 0.8 mg of a n-butyl cyclopentadiene zirconium dichloride. Ethylene and Fischer-Tropsch derived 1-hexene were introduced simultaneously at flow rates of 9 g/min. and 2.5 g/min. respectively. After 720 g of ethylene and 200 g of Fisher-Tropsch derived 1-hexene were introduced the monomer flows were stopped and the reaction continued for another 40 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of copolymer with a composition 0.2%, 1-hexene was 580g. The density of the copolymer as measured according to ASTM D 1505 was 0.931 g/cm$^3$ and MFI measured according to ASTM D 1238 was 0.73 dg/min. A GPC measurement was carried out and the $M_n$, $M_w$, $M_z$ and polydispersity (P) of the copolymer were 95376, 243707, 501000 and 2.56 respectively. DSC gave a melting temperature of 126 deg. and a fusion enthalpy of 148 J/g. Rheological determinations were done and the dynamic zero shear viscosity $\eta°$, the cross-over modulus $G_c$, the cross-over frequency $\omega_c$, the cross-over complex shear viscosity $\eta^*_c$ were respectively 99690 Pa.s, 202840 Pa, 39 rad/s and 7346 Pa.s at 150 °C; were respectively 80554 Pa.s, 198400 Pa, 43 rad/s and 6516 Pa.s at 160 °C; and were respectively 41017 Pa.s, 186260 Pa, 52 rad/s and 5079 Pa.s at 170 °C.

EXAMPLE 7

To a 10-liter stainless steel automated autoclave fitted with heating, cooling and stirring facilities, and thoroughly purged with nitrogen, was added 2000g polymerization grade toluene and the temperature set at 85°C. To this was added 100 ml of a 10% solution of MAO in toluene prereacted with 0.8 mg bis n-butyl cyclopentadiene zirconium dichloride. Ethylene and a 1/1 mass mixture of Fischer-Tropsch derived 1-pentene and 1-hexene were introduced simultaneously at flow rates of 15 g/min. and 3 g/min. respectively. After 50 min. the monomer flows were stopped, and the reaction continued for another 30 minutes. The catalyst was then deactivated by the introduction of 500 ml iso propanol and the slurry filtered, washed repeatedly with acetone and dried under vacuum at 70°C. The yield of terpolymer containing 0.17% 1-pentene and 0.23% 1-hexene respectively, was 630g. The density of the copolymer as measured according to ASTM D 1505 was 0.9497 g/cm$^3$ and MFI measured according to ASTM D 1238 was 1 dg/min. A GPC measurement was carried out and the $M_n$, $M_w$, $M_z$ and polydispersity (P) of the copolymer were 123059, 283897, 560328 and 2.31 respectively. DSC gave a melting temperature of 126 deg. and a fusion enthalpy of 145 J/g. Rheological determinations were done and the dynamic zero shear viscosity $\eta°$, the cross-over modulus $G_c$, the cross-over frequency $\omega_c$, the cross-over complex shear viscosity $\eta^*_c$ were respectively 94434 Pa.s, 178990 Pa, 32 rad/s and 7802 Pa.s at 150 °C; were respectively 60892 Pa.s, 186640 Pa, 36 rad/s and 7266 Pa.s at 160 °C; and were respectively 59435 Pa.s, 222780 Pa, 49 rad/s and 6377 Pa.s at 170 °C.

EXAMPLE 8

To a 10-liter stainless steel automated autoclave fitted with heating, cooling and stirring facilities, and thoroughly purged with nitrogen, was added 2000g polymerization grade toluene and the temperature set at 85°C. To this was added 100 ml of a 10% solution of MAO in toluene prereacted with 0.8 mg bis n-butyl cyclopentadiene zirconium dichloride. Ethylene and a 2/1 mass mixture of Fischer-Tropsch derived 1-pentene and 1-hexene were introduced simultaneously at flow rates of 15 g/min. and 6 g/min. respectively. After 50 min. the monomer flows were stopped, and the reaction continued for another 30 minutes. The catalyst was then deactivated by the introduction of 500 ml iso propanol and the slurry filtered, washed repeatedly with acetone and dried under vacuum at 70°C. The yield of terpolymer containing 0.2% 1-pentene and 0.2% 1-hexene respectively, was 630g. The density of the copolymer as measured according to ASTM D 1505 was 0.9547 g/cm$^3$ and MFI measured according to ASTM D 1238 was 1 dg/min. A GPC measurement was carried out and the $M_n$, $M_w$, $M_z$ and polydispersity (P) of the copolymer were 94976, 224818, 460299 and 2.37 respectively. DSC gave a melting temperature of 125 deg. and a fusion enthalpy of 140 J/g.

EXAMPLE 9

To a 10-liter stainless steel automated autoclave fitted with heating, cooling and stirring facilities, and thoroughly purged with nitrogen, was added 2000g polymerization grade toluene and the temperature set at 85°C. To this was added 100 ml of a 10% solution of MAO in toluene prereacted with 0.8 mg bis n-butyl cyclopentadiene zirconium dichloride. Ethylene and a 1/2 mass mixture of Fischer-Tropsch derived 1-pentene and 1-hexene were introduced simultaneously at flow rates of 15 g/min. and 6 g/min. respectively. After 50 min. the monomer flows were stopped, and the reaction continued for another 30 minutes. The catalyst was then deactivated by the introduction of 500 ml iso propanol and the slurry filtered, washed repeatedly with acetone and dried under vacuum at 70°C. The yield of terpolymer containing 0.15% 1-pentene and 0.23% 1-hexene respectively, was 630g. The density of the copolymer as measured according to ASTM D 1505 was 0.9537 g/cm$^3$ and MFI measured according to ASTM D 1238 was 0.9 dg/min. A GPC measurement was carried out and the $M_n$, $M_w$, $M_z$ and polydispersity (P) of the copolymer were 88448, 214377, 435172 and 2.42 respectively. DSC gave a melting temperature of 125 deg. and a fusion enthalpy 145 J/g.

EXAMPLE 10

To a 10-liter stainless steel automated autoclave fitted with heating, cooling and stirring facilities, and thoroughly purged with nitrogen, was added 2000g polymerization grade toluene and the temperature set at 85°C. To this was added 100 ml of a 10% solution of MAO in toluene prereacted with 0.8 mg bis n-butyl cyclopentadiene zirconium dichloride. Ethylene and a 2/3 mass mixture of Fischer-Tropsch derived 1-pentene and 1-hexene were introduced simultaneously at flow rates of 24 g/min. and 10 g/min. respectively. After 50 min. the monomer flows were stopped, and the reaction continued for another 30 minutes. The catalyst was then deactivated by the introduction of 500 ml iso propanol and the slurry filtered, washed repeatedly with acetone and dried under vacuum at 70°C. The yield of terpolymer containing 0.35% 1-pentene and 0.55% 1-hexene respectively, was 780g. The density of the copolymer as measured according to ASTM D 1505 was 0.936 g/cm$^3$ and MFI measured according to ASTM D 1238 was 2.9 dg/min. A GPC measurement was carried out and the $M_n$, $M_w$, $M_z$ and polydispersity (P) of the copolymer were 73337, 173645, 354722 and 2.37 respectively. DSC gave a melting temperature of 121 deg. and a fusion enthalpy of 127 J/g.

EXAMPLE 11

To a 10-liter stainless steel automated autoclave fitted with heating, cooling and stirring facilities, and thoroughly purged with nitrogen, was added 2000g polymerization grade toluene and the temperature set at 85°C. To this was added 150 ml of a 10% solution of MAO in toluene prereacted with 0.8 mg bis n-butyl cyclopentadiene zirconium dichloride. Ethylene and a 1/1 mass mixture of Fischer-Tropsch derived 1-pentene and 1-hexene were introduced simultaneously at flow rates of 18 g/min. and 12 g/min. respectively. After 50 min. the monomer flows were stopped, and the reaction continued for another 30 minutes. The catalyst was then deactivated by the introduction of 500 ml iso propanol and the slurry filtered, washed repeatedly with acetone and dried under vacuum at 70°C. The yield of terpolymer containing 0.3% 1-pentene and 0.35% 1-hexene respectively, was 810g. The density of the copolymer as measured according to ASTM D 1505 was 0.939 g/cm$^3$ and MFI measured according to ASTM D 1238 was 1.2 dg/min. A GPC measurement was carried out and the $M_n$, $M_w$, $M_z$ and polydispersity (P) of the copolymer was 90018, 209254, 427378 and 2.32 respectively. DSC gave a melting temperature of 121 deg. and a fusion enthalpy of 131 J/g.

EXAMPLE 12

To a 1-liter stainless steel automated autoclave fitted with heating, cooling and stirring facilities, and thoroughly purged with nitrogen, was added 350g polymerization grade toluene and the temperature set at 80°C. To this was added 1.5 ml of a 30% solution of MAO in toluene followed 5 minutes later by 2ml of a precontacted solution containing 1 ml of a 5$^{-3}$ M solution of a bis-indenyl dimethylsilyl zirconium dichloride and 1 ml of a 30% solution of MAO, both in toluene. Ethylene and Fischer-Tropsch derived 1-heptene were introduced simultaneously at flow rates of 4 g/min. and 2 g/min. respectively. After 100 g of ethylene and 50 g of Fisher-Tropsch derived 1-heptene were introduced, the monomer flows were stopped and the reaction continued for another 35 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of copolymer was 96g. The density of the copolymer as measured according to ASTM D 1505 was 0.905 g/cm$^3$ and MFI measured according to ASTM D 1238 was 0.7 dg/min. A GPC measurement was carried out and the $M_n$, $M_w$, $M_z$ and polydispersity (P) of the copolymer were 76356, 170303, 322962 and 2.23 respectively. DSC gave a melting temperature of 126 deg. and a fusion enthalpy of 59 J/g. Rheological determinations were done and the dynamic zero shear viscosity $\eta°$ and the cross-over complex shear viscosity $\eta^*_c$ were respectively 137040 and 6322 Pa.s at 150 °C; were respectively 123130 and 5312 Pa.s at 160 °C; and were respectively 80670 and 4350 Pa.s at 170 °C.

EXAMPLE 13

To a 1-liter stainless steel automated autoclave fitted with heating, cooling and stirring facilities, and thoroughly purged with nitrogen, was added 350g polymerization grade toluene and the temperature set at 80°C. To this was added 1.5 ml of a 30% solution of MAO in toluene followed 5 minutes later by 2ml of a pre-contacted solution containing 1 ml of a $5^{-3}$ M solution of a bis-indenyl dimethyl silyl zirconium dichloride and 1 ml of a 30% solution of MAO, both in toluene. Ethylene and a 1/1 mixture of Fischer-Tropsch derived 1-heptene and 1-pentene were introduced simultaneously at flow rates of 4 g/min. and 2 g/min. respectively. After 100 g of ethylene and 50 g of the mixture of Fisher-Tropsch derived 1-heptene and 1-pentene were introduced the monomer flows were stopped and the reaction continued for another 35 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of terpolymer was 82g. The density of the copolymer as measured according to ASTM D 1505 was 0.915 g/cm$^3$ and MFI measured according to ASTM D 1238 was 3.5 dg/min. A GPC measurement was carried out and the $M_n$, $M_w$, $M_z$ and polydispersity (P) of the copolymer were 48305, 131286, 311478 and 2.72 respectively. DSC gave a melting temperature of 126 deg. and a fusion enthalpy of 24 J/g.

EXAMPLE 14

To a 1-liter stainless steel automated autoclave fitted with heating, cooling and stirring facilities, and thoroughly purged with nitrogen, was added 350g polymerization grade toluene and the temperature set at 80°C. To this was added 1.5 ml of a 30% solution of MAO in toluene followed 5 minutes later by 2ml of a precontacted solution containing 1 ml of a $5^{-3}$ M solution of a bis-indenyl dimethylsilyl zirconium dichloride and 1 ml of a 30% solution of MAO, both in toluene. Ethylene and Fischer-Tropsch derived 1-octene were introduced simultaneously at flow rates both of 4 g/min. After 100 g of ethylene and 100 g of Fisher-Tropsch derived 1-octene were introduced, the monomer flows were stopped and the reaction continued for another 35 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of copolymer, containing 9.6% 1-octene, was 177g. The density of the copolymer as measured according to ASTM D 1505 was 0.88 g/cm$^3$ and MFI measured according to ASTM D 1238 was 67 dg/min. A GPC measurement was carried out and the $M_n$, $M_w$, $M_z$ and polydispersity (P) of the copolymer were 27548, 88690, 160252 and 3.22 respectively. DSC gave a melting temperature of 103 deg. and a fusion enthalpy of 10 J/g.

EXAMPLE 15

To a 1-liter stainless steel automated autoclave fitted with heating, cooling and stirring facilities, and thoroughly purged with nitrogen, was added 350g polymerization grade toluene and the temperature set at 80°C. To this was added 1.5 ml of a 30% solution of MAO in toluene followed 5 minutes later by 2ml of a precontacted solution containing 1 ml of a $5^{-3}$ M solution of a bis-indenyl dimethylsilyl zirconium dichloride and 1 ml of a 30% solution of MAO, both in toluene. Ethylene and Fischer-Tropsch derived 1-octene were introduced simultaneously at flow rates both of 4 g/min. After 100 g of ethylene and 100 g of Fisher-Tropsch derived 1-octene were introduced the monomer flows were stopped and the reaction continued for another 35 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of copolymer, containing 13.4% 1-octene, was 195g. The density of the copolymer as measured according to ASTM D 1505 was 0.84 g/cm$^3$ and MFI measured according to ASTM D 1238 was 102 dg/min. A GPC measurement was carried out and the $M_n$, $M_w$ $M_z$ and polydispersity (P) of the copolymer were 32103, 88675, 158670 and 2.76 respectively. DSC gave a melting temperature of 39 deg. and a fusion enthalpy of 13 J/g.

EXAMPLE 16

To a 1-liter stainless steel automated autoclave fitted with heating, cooling and stirring facilities, and thoroughly purged with nitrogen, was added 350g polymerization grade cyclohexane and the temperature set at 80°C. To this was added 10 ml of a 30% solution of MAO in toluene prereacted with 0.1 mg bis n-butyl cyclopentadiene zirconium dichloride. Ethylene and a 1/2 mass mixture of Fischer-Tropsch derived 1-pentene and 1-octene were introduced simultaneously at flow rates of 2g/min. and 1.5 g/min. respectively. After 50 min. the monomer flows were stopped, and the reaction continued for another 10 minutes after which the reaction mixture was cooled down. The catalyst was then deactivated by the introduction of 100 ml iso propanol and the slurry filtered, washed repeatedly with acetone and dried under vacuum at 70°C. The yield of terpolymer, containing 1.0% 1-pentene and 0.4% 1-octene, was 70g. The density of the copolymer as measured according to ASTM D 1505 was 0.9191 g/cm$^3$ and MFI measured according to ASTM D 1238 was 7 dg/min. A GPC measurement was carried out and the $M_n$, $M_w$, $M_z$ and polydispersity (P) of the copolymer were 52769, 147903, 307128 and 2.80 respectively. Rheological determinations were done according to description and the Carreau-Gahleitner equation parameters $\eta_{inf}$, a, b, p were respectively 6.79E-5 Pa.s, 4.55E-4, 0.38, 4.1, at 150 °C; were respectively 6.04E-5 Pa.s, 9.88E-4, 0.39, 3.2, at 160 °C; and were respectively 5.31E-5 Pa.s, 1.03E-3, 0.42, 2.9, at 170 °C

EXAMPLE 17

To a 1-liter stainless steel automated autoclave fitted with heating, cooling and stirring facilities, and thoroughly purged with nitrogen, was added 350g polymerization grade toluene and the temperature set at 80°C. To this was added 1.5 ml of a 30% solution of MAO in toluene followed 5 minutes later by 2ml of a pre-contacted solution containing 1 ml of a 5$^{-3}$ M solution of a bis-indenyl dimethyl silyl zirconium dichloride and 1 ml of a 30% solution of MAO, both in toluene. Ethylene and Fischer-Tropsch derived 1-nonene were introduced simultaneously at flow rates of 4g/min. and 2 g/min. respectively. After 100 g of ethylene and 50 g of Fisher-Tropsch derived 1-nonene were introduced the monomer flows were stopped and the reaction continued for another 35 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of copolymer was 114g. The density of the copolymer as measured according to ASTM D 1505 was 0.90 g/cm$^3$ and MFI measured according to ASTM D 1238 was 0.1 dg/min. GPC measurement was carried out and the $M_n$, $M_w$, $M_z$ and polydispersity (P) of the copolymer were 101377, 252832, 446233 and 2.49 respectively. DSC gave melting temperature of 128 deg. and a fusion enthalpy of 157 J/g. Rheological determinations were done and the Carreau-Gahleitner equation parameters $\eta_{inf}$, a, b, p and b/p were respectively 1.16E-4 Pa.s, 94.91, 3.41, 0.21, 16.10, at 150 °C; were respectively 1.18E-4 Pa.s, 94.91, 2.14, 0.34, 6.34, at 160 °C; and were respectively 1.20E-4 Pa.s, 94.91, 1.22, 0.58, 2.11 at 170 °C.

EXAMPLE 18

To a 1-liter stainless steel automated autoclave fitted with heating, cooling and stirring facilities, and thoroughly purged with nitrogen, was added 350g polymerization grade toluene and the temperature set at 80°C. To this was added 1.5 ml of a 30% solution of MAO in toluene followed 5 minutes later by 2ml of a pre-contacted solution containing 1 ml of a 5$^{-3}$ M solution of a bis-indenyl dimethyl silyl zirconium dichloride and 1 ml of a 30% solution of MAO, both in toluene. Ethylene and a 50/50 mixture of Fischer-Tropsch derived 1-nonene and 1-pentene were introduced simultaneously at flow rates of 4g/min. and 2g/min. respectively. After 100 g of ethylene and 50 g of the mixture of Fisher-Tropsch derived 1-nonene and 1-pentene were introduced the monomer flows were stopped and the reaction continued for another 35 minutes. After this period the catalyst was deactivated by the introduction of 100 ml iso propanol and the slurry cooled to room temperature under stirring. This slurry was filtered, washed repeatedly with acetone and dried under vacuum at 80°C. The yield of terpolymer was 112g. The density of the copolymer as measured according to ASTM D 1505 was 0.921 g/cm$^3$ and MFI measured according to ASTM D 1238 was 0.07 dg/min. GPC measurement was carried out and the $M_n$, $M_w$, $M_z$ and polydispersity (P) of the copolymer was 108792, 265145, 464682 and 2.44 respectively. DSC gave a melting temperature of 129 deg. and a fusion enthalpy of 153 J/g.

**Claims**

1.   A polymer of ethylene as a first monomeric component, with a high carbon number linear alpha olefin having at least five carbon atoms as a second monomeric component, with at least one of the monomeric components being Fischer- Tropsch derived so that it includes at least one other olefinic component.

2.   A polymer according to Claim 1, wherein a plurality of the other olefinic components are present in the Fischer-Tropsch derived monomeric component, with the molar proportion of other olefinic components in the Fischer-Tropsch derived monomeric component being from 0,002% to 2%.

3.   A polymer according to Claim 2, wherein the second monomeric component is Fischer-Tropsch derived; and wherein the high carbon number linear alpha olefin is 1-pentene, with the other olefinic components constituting about 0,5% of the second monomeric component and comprising

- 2-methyl-1-butene; and/or
- branched olefins having a carbon number of 5; and/or
- internal olefins having a carbon number of 5; and/or
- cyclic olefins having a carbon number of 5;

and/or
wherein the high carbon number linear alpha olefin is 1-hexene, with the other olefinic components present in the second monomeric component comprising

- branched olefins having a carbon number of 6; and/or
- internal olefins having a carbon number of 6; and/or
- cyclic olefins having a carbon number of 6;

and/or
wherein the high carbon number linear alpha olefin is 1-heptene, with the other olefinic components present in the second monomeric component comprising

- branched olefins having a carbon number of 7; and/or
- internal olefins having a carbon number of 7;

and/or
wherein the high carbon number linear alpha olefin is 1-octene, with the other olefinic components present in the second monomeric component comprising

- branched olefins having a carbon number of 8; and/or
- internal olefins having a carbon number of 8;

and/or
wherein the high carbon number linear alpha olefin is 1-nonene, with the other olefinic components present in the second monomeric component comprising

- branched olefins having a carbon number of 9; and/or
- internal olefins having a carbon number of 9.

4. A polymer according to Claim 3, wherein the ratio of the molar proportion of ethylene to the molar proportion of the high carbon number linear alpha olefin is from 99,9:0,1 to 80:20.

5. A polymer according to Claim 3 or Claim 4, which has a melt flow rate of from 0.01 to 100g/10minutes and/or which has a density in the range 0.835 to 0.950g/cc.

6. A polymer according to any one of Claims 3 to 5 inclusive, which has a power exponent b which complies with the following equations:

$$\text{At } 150°C, b \geq 0.0437[C] + 0.2013$$

$$\text{At } 160°C, b \geq 0.0308[C] + 0.2138$$

$$\text{At } 170°C, b \geq 0.0308[C] + 0.2538,$$

where b is a Carreau-Gahleitner parameter, and [C] is the high carbon number linear alpha olefin content in mole percentage; and/or
which has a power exponent p which complies with the following equations:

$$\text{At } 150°C, p \geq -1.2877[C] + 6.8666$$

$$At\ 160°C,\ p \geq -1.1233[C] + 6.3942$$

$$At\ 170°C,\ p \geq -1.1507[C] + 6.3063,$$

where p is a Carreau-Gahleitner parameter, and is the high carbon number linear alpha olefin content in mole percentage; and/or
which has a power exponent n which complies with the following equations:

$$At\ 150°C,\ n \geq 0.2995[C] - 0.8328$$

$$At\ 160°C,\ n \geq 0.3011\ [C] - 0.8435$$

$$At\ 170°C,\ n \geq 0.2942[C] - 0.8115$$

where n is a Carreau-Gahleitner parameter, and [C] is the high carbon number linear alpha olefin content in mole percentage; and/or
which complies with the following equations:

$$At\ 150°C,\ 1/MFI \geq 1.5364e^{-1E-06\eta°}$$

$$At\ 160°C,\ 1/MFI \geq 1.5486e^{-1E-06\eta°}$$

$$At\ 170°C,\ 1/MFI \geq 1.5513e^{-1E-06\eta°}$$

where MFI is the melt flow index and $\eta°$ is the dynamic zero shear viscosity.

7. A polymer according to any one of Claims 3 to 6 inclusive, which is that obtained by reacting at least ethylene and the high carbon number Fischer-Tropsch derived linear alpha olefin in one or more reaction zones, while maintaining the reaction zone(s) at a pressure between atmospheric pressure and 5000kg/cm$^2$, and at a temperature between ambient and 300°C, in the presence of a metallocene catalyst, or a catalyst system comprising a metallocene catalyst and a cocatalyst.

8. A process for producing a polymer, which comprises reacting at least a first monomeric component comprising ethylene and a second monomeric component comprising a high carbon number linear alpha olefin having at least five carbon atoms, and wherein at least one of the monomeric components is Fischer-Tropsch derived so that it contains also one or more other olefinic components, in one or more reaction zones, while maintaining the reaction zone(s) at a pressure between atmospheric pressure and 5000kg/cm$^2$, and at a temperature between ambient and 300°C, in the presence of a catalyst, or a catalyst system comprising a catalyst and a cocatalyst.

9. A process according to Claim 8, wherein the second monomeric component is Fischer-Tropsch derived; and wherein the high carbon number linear alpha olefin is 1-pentene, with the other olefinic components constituting about 0,5% of the second monomeric component and comprising

- 2-methyl-1-butene; and/or
- branched olefins having a carbon number of 5; and/or
- internal olefins having a carbon number of 5; and/or
- cyclic olefins having a carbon number of 5;

and/or
wherein the high carbon number linear alpha olefin is 1-hexene, with the other olefinic components present in the second monomeric component comprising

- branched olefins having a carbon number of 6; and/or
- internal olefins having a carbon number of 6; and/or
- cyclic olefins having a carbon number of 6;

and/or
wherein the high carbon number linear alpha olefin is 1-heptene, and wherein the second monomeric component is Fischer-Tropsch derived, with the other olefinic components present in the second monomeric component comprising

- branched olefins having a carbon number of 7; and/or
- internal olefins having a carbon number of 7;

and/or
wherein the high carbon number linear alpha olefin is 1-octene, with the other olefinic components present in the second monomeric component comprising

- branched olefins having a carbon number of 8; and/or
- internal olefins having a carbon number of 8;

and/or
wherein the high carbon number linear alpha olefin is 1-nonene, and wherein the second monomeric component is Fischer-Tropsch derived, with the other olefinic components present in the second monomeric component comprising

- branched olefins having a carbon number of 9; and/or
- internal olefins having a carbon number of 9.

10. A process according to Claim 8 or Claim 9, wherein the catalyst is a metallocene catalyst.

11. A polymer of ethylene as a first monomeric component, with a first high carbon number linear alpha olefin having at least five carbon atoms as a second monomeric component and with a second different high carbon number linear alpha olefin having at least four carbon atoms as a third monomeric component, with at least one of the monomeric components being Fischer-Tropsch derived so that it contains also at least one other olefinic component.

12. A polymer according to Claim 11, wherein a plurality of the other olefinic components are present in the Fischer-Tropsch derived monomeric component, with the molar proportion of other olefinic components in the Fischer-Tropsch derived monomeric component being from 0,002% to 2%.

13. A polymer according to Claim 12, wherein the second monomeric component is Fischer-Tropsch derived; and wherein the high carbon number linear alpha olefin of the second monomeric component is 1-pentene, with the other olefinic components constituting about 0,5% of the second monomeric component and comprising

- 2-methyl-1-butene; and/or
- branched olefins having a carbon number of 5; and/or
- internal olefins having a carbon number of 5; and/or
- cyclic olefins having a carbon number of 5;

and/or
wherein the high carbon number linear alpha olefin of the second monomeric component is 1-hexene, with the other olefinic components present in the second monomeric component comprising

- branched olefins having a carbon number of 6; and/or
- internal olefins having a carbon number of 6; and/or
- cyclic olefins having a carbon number of 6;

and/or
wherein the high carbon number linear alpha olefin of the second monomeric component is 1-heptene, with the other olefinic components present in the second monomeric component comprising

- branched olefins having a carbon number of 7; and/or
- internal olefins having a carbon number of 7;

and/or
wherein the high carbon number linear alpha olefin of the second monomeric component is 1-octene, with the other olefinic components present in the second monomer component comprising

- branched olefins having a carbon number of 8; and/or
- internal olefins having a carbon number of 8;

and/or
wherein the high carbon number linear alpha olefin of the second monomeric component is 1-nonene, with the other olefinic components present in the second monomeric component comprising

- branched olefins having a carbon number of 9; and/or
- internal olefins having a carbon number of 9.

14. A polymer according to Claim 12 or Claim 13, wherein the ratio of the molar proportion of ethylene to the sum of the molar proportions of the high carbon number linear alpha olefins is from 99,9:0,1 to 80:20 and/or wherein the ratio of the molar proportions of the different high carbon number linear alpha olefins is from 0,1:99,9 to 99,9:0,1.

15. A polymer according to Claim 12, which is a terpolymer of ethylene with 1-butene as the third monomeric component and 1-pentene, 1-hexene, 1-heptene, 1-octene, or 1-nonene as the second monomeric component.

16. A polymer according to Claim 12, which is a terpolymer of ethylene with 1-pentene as the third monomeric component and 1-hexene, 1-heptene, 1-octene, or 1-nonene as the second monomeric component.

17. A polymer according to Claim 12, which is a terpolymer of ethylene with 1-hexene as the third monomeric component and 1-heptene, 1-octene, or 1-nonene as the second monomeric component.

18. A polymer according to Claim 12, which is a terpolymer of ethylene with 1-heptene as the third monomeric component and 1-octene, or 1-nonene as the second monomeric component.

19. A polymer according to Claim 12, which is a terpolymer of ethylene with 1-octene as the third monomeric component and 1-nonene as the second monomeric component.

20. A polymer according to any one of Claims 12 to 19 inclusive, which has a melt flow rate of from 0.01 to 100g/10minutes and/or which has a density in the range 0.835 to 0.950g/cc.

21. A polymer according to any one of Claims 12 to 20 inclusive, which has a power exponent b which complies with the following equations:

$$At\ 150°C,\ b \geq 0.037[C] + 0.2052$$

$$At\ 160°C,\ b \geq 0.0395[C] + 0.2342$$

$$At\ 170°C,\ b \geq 0.0494[C] + 0.2202,$$

where b is a Carreau-Gahleitner parameter, and [C] is the high carbon number linear alpha olefin content in mole percentage; and/or
which has a power exponent p which complies with the following equations:

At 150°C, p ≥ -0.4075[C] + 3.4135

At 160°C, p ≥ -0.5016[C] + 3.732

At 170°C, p ≥ -0.9091 [C] + 5.3455

where p is a Carreau-Gahleitner parameter, and [C] is the high carbon number linear alpha olefin content in mole percentage; and/or
which has a power exponent n which complies with the following equations:

At 150°C, n ≥ 0.169[C] - 0.3439

At 160°C, n ≥ 0.1765[C] - 0.4004

At 170°C, n ≥ 0.242[C] - 0.6489

where n is a Carreau-Gahleitner parameter, and [C] is the high carbon number linear alpha olefin content in mole percentage; and/or
which complies with the following equations:

At 150°C, $1/MFI \geq 0.123e^{2E-05\eta°}$

At 160°C, $1/MFI \geq 0.1239e^{2E-05\eta°}$

At 170°C, $1/MFI \geq 0.1275e^{2E-05\eta°}$,

where MFI is the melt flow index and η° is the dynamic zero shear viscosity.

**22.** A polymer according to any one of Claims 11 to 21 inclusive, which is that obtained by reacting at least ethylene, the first high carbon number linear alpha olefin and the different high carbon number linear alpha olefin in one or more reaction zones, while maintaining the reaction zone(s) at a pressure between atmospheric pressure and 5000kg/cm$^2$, and at a temperature between ambient and 300°C, in the presence of a catalyst, or a metallocene catalyst system comprising a metallocene catalyst and a cocatalyst.

**23.** A process for producing a polymer, which comprises reacting at least ethylene as a first monomeric component, a first high carbon number linear alpha olefin having at least five carbon atoms as a second monomeric component and a different high carbon number linear alpha olefin having at least four carbon atoms as third monomeric component, with at least one of the monomeric components being Fischer-Tropsch derived so that it contains also one or more other olefinic components, in one or more reaction zones, while maintaining the reaction zone(s) at a pressure between atmospheric pressure and 5000kg/cm$^2$, and at a temperature between ambient and 300°C, in the presence of a catalyst, or a catalyst system comprising a catalyst and a cocatalyst.

**24.** A process according to Claim 23, wherein the second monomeric component is Fischer-Tropsch derived; and wherein the first high carbon number linear alpha olefin is 1-pentene, with the other olefinic components constituting about 0,5% of the second monomeric component and comprising

- 2-methyl-1-butene; and/or
- branched olefins having a carbon number of 5; and/or
- internal olefins having a carbon number of 5; and/or

- cyclic olefins having a carbon number of 5;

and/or

wherein the first high carbon number linear alpha olefin is 1-hexene, with the other olefinic components in the second monomeric component comprising

- branched olefins having a carbon number of 6; and/or
- internal olefins having a carbon number of 6; and/or
- cyclic olefins having a carbon number of 6;

and/or

wherein the first high carbon number linear alpha olefin is 1-heptene, with the other olefinic components in the second monomeric component comprising

- branched olefins having a carbon number of 7; and/or
- internal olefins having a carbon number of 7;

and/or

wherein the first high carbon number linear alpha olefin is 1-octene, with the other olefinic components in the second monomeric component comprising

- branched olefins having a carbon number of 8; and/or
- internal olefins having a carbon number of 8;

and/or

wherein the first high carbon number linear alpha olefin is 1-nonene, with the other olefinic components in the second monomeric component comprising

- branched olefins having a carbon number of 9; and/or
- internal olefins having a carbon number of 9.

**25.** A process according to Claim 23 or Claim 24, wherein the catalyst is a metallocene catalyst.

**European Patent Office**

## EUROPEAN SEARCH REPORT

Application Number

EP 01 30 0840

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 05280 A (TINCUL IOAN ;JOUBERT DAWID JOHANNES (ZA); SASOL TECH PTY LTD (ZA);) 3 February 2000 (2000-02-03) * the whole document * | 1-25 | C08F210/02 |
| X | WO 97 45454 A (SASOL CHEMICALS EUROP LTD ;TINCUL IOAN (ZA); JOUBERT DAWID JOHANNE) 4 December 1997 (1997-12-04) * claims 12,13,69,70 * | 1,25 | |
| A | WO 99 01485 A (SASOL CHEMICALS EUROP LTD ;TINCUL IOAN (ZA); JOUBERT DAWID JOHANNE) 14 January 1999 (1999-01-14) * page 4, line 27 - page 5, line 2; claims 1,14 * | 1 | |
| A | US 3 060 120 A (S.B. LIPPINCOTT AND A.J. MORWAY) 23 October 1962 (1962-10-23) * column 1, line 33 - column 1, line 43; claim 1 * | 1 | |

TECHNICAL FIELDS SEARCHED (Int.Cl.7)

C08F

The present search report has been drawn up for all claims

| Place of search | Date of completion of the search | Examiner |
|---|---|---|
| MUNICH | 15 June 2001 | Van Golde, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 01 30 0840

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2001

| Patent document cited in search report | | Publication date | Patent family member(s) | | Publication date |
|---|---|---|---|---|---|
| WO 0005280 | A | 03-02-2000 | AU | 4640799 A | 14-02-2000 |
| | | | BR | 9912244 A | 10-04-2001 |
| WO 9745454 | A | 04-12-1997 | AT | 195744 T | 15-09-2000 |
| | | | AU | 2971297 A | 05-01-1998 |
| | | | AU | 2971397 A | 05-01-1998 |
| | | | AU | 5840296 A | 18-12-1996 |
| | | | BR | 9609280 A | 11-05-1999 |
| | | | BR | 9709496 A | 10-08-1999 |
| | | | BR | 9710683 A | 21-12-1999 |
| | | | CA | 2256363 A | 04-12-1997 |
| | | | CN | 1227572 A | 01-09-1999 |
| | | | CN | 1234811 A | 10-11-1999 |
| | | | DE | 69604662 D | 18-11-1999 |
| | | | DE | 69604662 T | 20-04-2000 |
| | | | DE | 69702907 D | 28-09-2000 |
| | | | DE | 69702907 T | 14-12-2000 |
| | | | EP | 0828765 A | 18-03-1998 |
| | | | EP | 0902799 A | 24-03-1999 |
| | | | EP | 0902794 A | 24-03-1999 |
| | | | ES | 2150253 T | 16-11-2000 |
| | | | WO | 9745460 A | 04-12-1997 |
| | | | JP | 2000509426 T | 25-07-2000 |
| | | | US | 6191246 B | 20-02-2001 |
| | | | ZA | 9704797 A | 30-12-1998 |
| | | | ZA | 9704798 A | 30-11-1998 |
| WO 9901485 | A | 14-01-1999 | AU | 8230498 A | 25-01-1999 |
| | | | BR | 9810982 A | 08-08-2000 |
| | | | CN | 1268145 T | 27-09-2000 |
| | | | EP | 0993474 A | 19-04-2000 |
| | | | HU | 0002365 A | 28-11-2000 |
| | | | PL | 337968 A | 11-09-2000 |
| US 3060120 | A | 23-10-1962 | DE | 1149125 B | |
| | | | FR | 1172336 A | 09-02-1959 |
| | | | GB | 825885 A | 23-12-1959 |

EPO FORM P0459

For more details about this annex : see Official Journal of the European Patent Office, No. 12/82